(19) Europäisches Patentamt
European Patent Office
Office européen des brevets

(11) EP 4 367 171 B1

(12) EUROPEAN PATENT SPECIFICATION

(45) Date of publication and mention of the grant of the patent:
**20.11.2024 Bulletin 2024/47**

(21) Application number: **22753757.8**

(22) Date of filing: **29.07.2022**

(51) International Patent Classification (IPC):
***C08J 5/18*** *(2006.01)* ***H01M 10/00*** *(2006.01)*

(52) Cooperative Patent Classification (CPC):
**C08J 5/18; H01B 1/20; H01M 4/661; H01M 4/667; H01M 4/668; H01M 10/0525; H01M 10/054; H01M 10/056; H01M 50/414; H01M 50/431; H01M 50/434; H01M 50/443; H01M 50/446; H01M 50/489;** C08J 2367/02; (Cont.)

(86) International application number:
**PCT/GB2022/052005**

(87) International publication number:
**WO 2023/007180 (02.02.2023 Gazette 2023/05)**

(54) **COPOLYESTER FILMS FOR USE AS SEPARATORS IN METAL-ION BATTERIES**

COPOLYESTERFOLIEN ZUR VERWENDUNG ALS SEPARATOREN IN METALLIONENBATTERIEN

FILMS DE COPOLYESTER POUR UNE UTILISATION COMME SÉPARATEURS DANS DES BATTERIES MÉTAL-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2021 GB 202110926**

(43) Date of publication of application:
**15.05.2024 Bulletin 2024/20**

(73) Proprietor: **Mylar Specialty Films U.S. Limited Partnership**
**Chester, VA 23836 (US)**

(72) Inventors:
- **JONES, Stephen**
  **Cleveland TS10 4RF (GB)**
- **SCHOSSELER, Lucien**
  **5326 Contern (LU)**
- **TODD, Megan Alicia**
  **Cleveland TS10 4RF (GB)**
- **TURNER, David**
  **Cleveland TS10 4RF (GB)**
- **SANKEY, Stephen William**
  **Cleveland TS10 4RF (GB)**

(74) Representative: **Carpmaels & Ransford LLP**
**One Southampton Row**
**London WC1B 5HA (GB)**

(56) References cited:
**EP-A1- 3 907 802** **WO-A1-2020/226472**
**JP-A- 2015 187 941** **US-A1- 2017 294 678**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 367 171 B1

(52) Cooperative Patent Classification (CPC): (Cont.)
H01M 4/485; H01M 4/505; H01M 4/525;
H01M 4/5825; H01M 4/587; H01M 2300/0068;
H01M 2300/0071; H01M 2300/0082;
H01M 2300/0091; Y02E 60/10

## Description

This invention relates to copolyester films and other articles made therefrom, and methods for their synthesis. In particular, the present invention is concerned with copolyester films which exhibit the properties required for use as a separator in metal-ion batteries, particularly lithium-ion batteries.

Lithium-ion batteries are widely used in the field of rechargeable batteries which is set to continually grow over the foreseeable future due, in part, to the increasing demand for consumer electronics and storage of renewable energy. During battery operation (i.e. during charging and discharging), lithium ions are transferred between the anode and cathode. Commercially available lithium-ion batteries are usually provided as wet-cell batteries which contain liquid or gel electrolytes containing lithium salts and a microporous separator. The microporous separator is placed between and in contact with two active solid electrodes. Generally, microporous separators for lithium-ion batteries have a thickness of about 20μm to about 25μm and are based on drawn polyolefin films (particularly polyethylene and polypropylene). The separator enables the movement of the liquid or gel electrolyte through its pores, thereby enabling movement of the lithium ions, but prevents direct electric contact between the anode and cathode in the battery. However, there remain concerns about the safety of wet-cell lithium-ion batteries, which have been known to catch fire or even explode. The porous network can lead to growth of lithium dendrites between the anode and cathode, which can result in short-circuiting of the battery, thermal run-away and flammability. The flammability risk is exacerbated by the relatively low glass transition and melting temperatures of these polyolefins. A further disadvantage of polyolefin films as separators is the relatively low mechanical strength, particularly the relatively low tensile strength in the transverse direction of a biaxially drawn film.

Dry-cell batteries have been developed which reduce some of the above safety concerns. These dry-cell batteries contain a solid separator between the cathode and anode, which prevents contact between the electrodes and provides a physical barrier to the growth of dendrites. In dry-cell batteries, the potentially flammable liquid electrolyte is eliminated. Thus, the separator must effectively function as both separator and electrolyte, and so for lithium-ion batteries the separator must enable migration of the lithium ions within its structure. Such lithium-conductive solid separators can be broadly categorised into two groups.

The first group focuses on the use of inorganic lithium-ion conductors based on ceramics such as LiPON (lithium phosphorous oxynitride, $Li_2PO_2N$), LLTO (lithium lanthanum titanium oxide) or LGPS ($Li_{10}GeP_2S_{12}$). Typically, conductivities of up to $10^{-1}$ $Scm^{-1}$ are attainable with ceramic separators. Such inorganic lithium-ion conductors are provided as thin films, which are commonly deposited using sputtering methods. However, deposition rates are low and processing has been limited to coin batteries which have small surfaces. Furthermore, during battery operation, the volume of the anodes and cathodes change and so the separator needs to accommodate these variations in volume. If the separator is too rigid, it may be damaged during the charging and discharging cycles or have limited cycling capability. This is a particular issue for ceramic separators, which are particularly rigid. The rigid and brittle nature of ceramic separators can also pose problems during separator manufacture, and during cell winding and assembly of batteries as the ceramic film is susceptible to cracking.

The second group focuses on the use of polymeric films comprising a polymeric matrix and a lithium salt such as $LiClO_4$. WO2019/186173 discloses thin polymeric films comprising a copolyester which comprises repeating units derived from an aliphatic diol, an aromatic dicarboxylic acid and a poly(alkylene oxide), wherein the film further comprises lithium ions derived from lithium salts. Conductivities of such separators at room temperature are generally lower than ceramic conductors.

US 2017/294678 A1 relates to a composite solid electrolyte that includes: a lithium ion conductive solid electrolyte; and a polymer-containing electrolyte coating layer on a surface of a lithium ion conductive solid electrolyte, wherein the polymer-containing electrolyte coating layer includes an ion conductive polymer having an alkylene oxide segment.

EP 3907802 A1 relates to, in a solid electrolyte membrane, an ion conduction blocking layer formed in the electrolyte membrane by a polymer material having low ionic conductivity by phase separation of polymer under the high temperature condition such as an increase in the internal temperature of a battery, to block the movement of lithium ions.

JP 2015 187941 A relates to a polymer electrolytic composition that comprises: a block polymer (D) having at least one block (A) selected from a group consisting of a polyolefin block (a1), a polyester block (a2), a polyamide block (a3), a polyimide block (a4) and a polyurethane block (a5), a polyether block (B) having a number-average molecular weight of 500-5,000, and a block (C) consisting of a residue obtained by removing two carboxyl groups from a dicarboxylic acid with 3C-24C, which is included in neither the block (A) nor the block (B); and a lithium salt (E).

It is an object of the present invention to address one or more of the aforementioned problems. In particular, it is an object of the present invention to provide improved films for use as separators in a metal-ion solid state battery, i.e. the dry cell arrangement noted above, or in a metal-ion battery that comprises liquid or gel electrolytes. It is a particular object to provide improved films for use as separators in a metal-ion solid state battery. It is a particular object to provide

films which at least maintain, and preferably improve, the conductivities of existing metal-conductive separators, whilst exhibiting good mechanical strength compared to ceramic separators, particularly reduced brittleness and/or improved flexibility. It is a particular object of the present invention to provide films which at least maintain and preferably improve the conductivities of existing metal-conductive separators, which exhibit good mechanical strength compared to ceramic separators, particularly reduced brittleness and/or improved flexibility, while ensuring ease of film formation and hence improving efficiency and economy of manufacture. It is a further object of the invention to provide such film separators which allow the thickness and/or weight thereof to be reduced while at least maintaining mechanical performance, so that the volume and/or weight of the battery can be reduced. Desirably, the film separators should exhibit flexibility without brittleness.

The present invention is particularly directed to lithium-ion batteries. Thus, the terms "metal ion", "metal", "metal-conductive separator" and "metal-ion battery" as used in the preceding paragraph and in the corresponding context hereinbelow preferably refer to "lithium ion", "lithium", "lithium-conductive separator" and "lithium-ion battery", respectively. However, the present invention is also applicable to other rechargeable metal-ion batteries, including sodium, potassium, calcium, magnesium and aluminium, particularly sodium, magnesium and aluminium, and particularly sodium.

According to a **first** aspect, there is provided a copolyester film comprising a copolyester which comprises repeating units derived from a diol, a dicarboxylic acid and a poly(alkylene oxide), wherein the copolyester film further comprises a first metal ion-containing component selected from conductive ceramic particulate materials, wherein said first metal ion-containing component is a lithium ion-containing component or a sodium ion-containing component, wherein the film may further comprise additional metal ions from one or more sources other than said conductive ceramic particulate material, and wherein, when present, the metal of said additional metal ions is the same as the metal of said first metal ion-containing component.

It will be appreciated that, for utility in a metal-ion battery, the metal of said first metal ion-containing component of said film is preferably the same as the metal of said additional metal ions (which is also referred to hereinbelow as the second metal ion-containing component).

Preferably, said first metal ion-containing component is a first lithium ion-containing component, and in that instance said additional metal ions are additional lithium ions. Alternatively, said first metal ion-containing component is a first sodium ion-containing component, and in that instance said additional metal ions are additional sodium ions.

Preferably, the copolyester film comprises said additional metal ions.

In a particularly preferred embodiment, the first aspect of the present invention provides a copolyester film comprising said copolyester, a first lithium ion-containing component selected from conductive ceramic particulate materials, and a second lithium ion-containing component selected from lithium salts. It will be appreciated that said first and second lithium ion-containing components are different from each other.

In an alternative embodiment, the first aspect of the present invention provides a copolyester film comprising said copolyester, a first sodium ion-containing component selected from conductive ceramic particulate materials, and a second sodium ion-containing component selected from sodium salts. It will be appreciated that said first and second sodium ion-containing components are different from each other.

The copolyester films of the invention are suitable as separators, and particularly suitable as a solid electrolyte. Thus, the copolyester films exhibits volume conductivity rather than merely surface conductivity. The inventors have surprisingly found that the films of the present invention are suitable as solid separators which exhibit an excellent combination of good conductivity, high mechanical strength (particularly reduced brittleness and/or improved flexibility), while attaining such performance at relatively low thickness, and also while allowing efficient and reliable manufacture. Such separators exhibit excellent dimensional stability, particularly at elevated temperatures, and are able to tolerate the volume variations of electrodes during typical battery cycling.

As used herein, the term "copolyester" refers to a polymer which comprises ester linkages and which is derived from three or more types of comonomers. The copolyesters described herein are thermoplastic.

Suitable dicarboxylic acids for the copolyester include aromatic dicarboxylic acids such as terephthalic acid, isophthalic acid, phthalic acid and naphthalene dicarboxylic acid (such as 2,5-, 2,6- or 2,7- naphthalene dicarboxylic acid), as well as aliphatic dicarboxylic acids such as succinic acid, sebacic acid, adipic acid and azelaic acid. Cycloaliphatic dicarboxylic acids may also be used. Other suitable dicarboxylic acids include 4,4'-diphenyldicarboxylic acid and hexahydro-terephthalic acid. Preferably, the dicarboxylic acid used in the present invention is an aromatic dicarboxylic acid, preferably terephthalic acid or isophthalic acid, preferably terephthalic acid.

The copolyester preferably comprises at least one aromatic dicarboxylic acid, preferably terephthalic, isophthalic, or naphthalene dicarboxylic acids, and preferably terephthalic acid or isophthalic acid, and preferably terephthalic acid. In a first and most preferred embodiment, the dicarboxylic acid component comprises only one aromatic dicarboxylic acid. In a second embodiment, the dicarboxylic acid component comprises a first aromatic dicarboxylic acid (preferably terephthalic acid or isophthalic acid, preferably terephthalic acid) and a second dicarboxylic acid. The second dicarboxylic acid may be selected from aliphatic dicarboxylic acids such as succinic acid, sebacic acid, adipic acid or azelaic acid, and in one embodiment the second dicarboxylic acid is azelaic acid.

Suitable diols for the copolyester include acyclic, alicyclic and aromatic dihydroxy compounds. Preferred diols have 2-15 carbon atoms, and include ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, and 1,5-dihydroxynaphthalene, etc. An aliphatic diol is preferred, especially acyclic aliphatic diols containing 2-8 carbon atoms, especially aliphatic diols containing 2-4 carbon atoms. An unbranched aliphatic diol is preferred. Preferably the diol is selected from ethylene glycol, 1,3-propanediol and 1,4-butanediol, more preferably from ethylene glycol and 1,4-butanediol, and most preferably ethylene glycol. Cycloaliphatic (alicylic) glycols such as 1,4-cyclohexanedimethanol (CHDM) can also be used. Equivalent ester-forming derivatives of diols may be used in place of said diol. Preferably, the copolyester comprises only one type of diol residue. In one embodiment, at least 90 mol%, preferably at least 95 mol%, preferably at least 98 mol%, and preferably at least 99 mol% of said diol fraction is made up of one type of diol.

Suitable poly(alkylene oxide)s for the copolyester are preferably selected from $C_2$ to $C_{15}$, preferably $C_2$ to $C_{10}$, preferably $C_2$ to $C_6$ alkylene chains. The poly(alkylene oxide) may be selected from polyethylene glycol (PEG), polypropylene glycol (PPG) and poly(tetramethylene oxide) glycol (PTMO), preferably polyethylene glycol. Ethylene oxide-terminated polypropylene oxide) segments may also be used. In one embodiment, the copolyester comprises only one type of poly(alkylene oxide) residue. In an alternative embodiment, the copolyester comprises two or more types of poly(alkylene oxide) residues, such as mixture of polyethylene glycol (PEG) and polypropylene glycol (PPG).

The number average molecular weight ($M_N$) of the poly(alkylene oxide) glycol is preferably from about 200 g/mol to about 20000 g/mol, preferably from about 200 g/mol to about 6000 g/mol, preferably from about 200 g/mol to about 5000 g/mol, preferably no more than about 5000 g/mol, preferably no more than about 4000 g/mol, preferably from about 400 g/mol to about 3900 g/mol, preferably at least about 500 g/mol, preferably from about 500 g/mol to about 3800 g/mol, most preferably from about 500 g/mol to about 3700 g/mol, preferably from about 800 g/mol to about 3600 g/mol, preferably from about 1000 g/mol to about 3600 g/mol, preferably from about 2000 g/mol to about 3500 g/mol, and preferably from about 3350 to about 3450 g/mol, and preferably about 3350 g/mol or about 3450 g/mol. The number average molecular weight ($M_N$) of the poly(alkylene oxide) is preferably at least about 200 g/mol, preferably at least about 400 g/mol, preferably at least about 500 g/mol, and preferably at least about 800 g/mol, for example at least about 1000 g/mol. The number average molecular weight ($M_N$) of the poly(alkylene oxide) is preferably no more than about 20000 g/mol, preferably no more than about 5000 g/mol, preferably no more than about 4000 g/mol, and preferably no more than about 3800 g/mol, for example no more than about 3700 g/mol.

It has been found that if the molecular weight of the poly(alkylene oxide) is too high, it becomes harder to copolymerise with the dicarboxylic acid and aliphatic diol to form a copolyester with a sufficiently high melt viscosity for reliable film formation, particularly in a melt extrusion process. In addition, it has been found that if the molecular weight of the poly(alkylene oxide) is too high, the conductivity may decrease.

Unless the context indicates otherwise the term molecular weight as used herein refers to number average molecular weight ($M_N$) which is measured by the method as described herein.

The polydispersity index, PDI, (or dispersity, Đ) is defined as $M_W$ / $M_N$. where $M_W$ is the weight average molecular weight. The polydispersity index is a measure of the uniformity (or heterogeneity) of the size of the different macromolecules that comprise a polymer (which is a mixture of macromolecules of different sizes). Compositions with a polydispersity index of 1 (i.e. which are monodisperse) consist of macromolecules each of which has the same size (such as dendrimers). Monodisperse compositions of macromolecules are typically made by non-polymerisation processes and are typically not referred to as polymers.

The poly(alkylene oxide) of the copolyester preferably has a polydispersity index of above 1, preferably at least about 1.01, preferably at least about 1.1, preferably at least about 1.2, and preferably no more than about 2.0, preferably no more than about 1.8, preferably no more than about 1.6, and preferably from about 1.01 to about 2.0, preferably about 1.1 to about 1.8, and preferably about 1.2 to about 1.6.

The copolyesters may be block (segmented) copolymers comprising alternating random-length sequences joined by ester linkages. Such copolyesters exhibit semi-crystalline (or hard) segments derived from an aromatic dicarboxylic acid and an aliphatic diol, and amorphous (or soft) segments derived from poly(alkylene oxide). Hard segments are made up of repeating units of [$R_1$-O-C(=O)-A-C(=O)-O] wherein $R_1$ is derived from the aliphatic diol and A is the aromatic ring (preferably phenyl or naphthyl) derived from the aromatic dicarboxylic acid defined hereinabove. Soft segments are made up of repeating units of [R-O] where R is the alkylene chain from the poly(alkylene oxide). The soft segments may be end-capped with said aromatic dicarboxylic acid via an ester linkage.

In a further embodiment, the copolyesters are random copolymers, in which the aromatic dicarboxylic acid, aliphatic diol and poly(alkylene oxide) units are arranged in a random sequence in the copolyester backbone.

Between these two extremes of random and block copolymers lie copolyesters which are referred to herein as "block-like" copolymers. In the block-like copolymers, the poly(alkylene oxide) units are interspersed between the aromatic dicarboxylic acid units to a greater degree than in the block copolymers, such that the crystalline (or hard) segments noted above are, on average, significantly shorter than in the block copolymers. The sequence of the comonomer units

in the copolymer chain, i.e. the degree of randomness of the copolyester, may be determined using conventional techniques known in the art, and preferably by $^{13}C$ NMR spectroscopy as described herein. The copolyester can be characterised as a block, block-like or random copolyester by quantifying the degree of randomness, *B*, with a value of 0 representing a pure block copolymer and a value of 1 representing a statistically random copolymer as defined by a Bernoulli model.

Preferably, *B* is in the range of from about 0.1 to 1.0, preferably from about 0.2 to about 0.95, preferably from about 0.3 to about 0.9, preferably from about 0.4 to about 0.8, for example from about 0.5 to about 0.7. The copolyester preferably has a value of *B* of at least about 0.1, preferably at least about 0.2, preferably at least about 0.3, and preferably at least about 0.4, for example at least about 0.5. The copolyester preferably has a value of *B* of no more than 1.0, preferably no more than about 0.95, preferably no more than about 0.9, preferably no more than about 0.8, and preferably no more than about 0.7.

Preferably, the copolymers of the present invention are the "block-like" copolyesters or the random copolyesters.

More preferably, the copolymers of the present invention are the "block-like" copolyesters, which are obtainable by selecting the molecular weight for the poly(alkylene oxide) as described herein.

It has been found that the molecular weight of the poly(alkylene oxide) has a significant influence on the sequence of the comonomers in the copolymer, and the characterisation of the copolymer as a block, block-like or random copolymer. Thus, lower molecular weight poly(alkylene oxide)s favour the formation of random copolymers, and higher molecular weight poly(alkylene oxide)s favour the formation of block copolymers. Block copolymers typically exhibit a greater tendency to crystallise and a higher melting temperature, relative to the corresponding random copolymers. Higher melting temperatures are preferably avoided in the present invention, since they require higher processing temperatures and there is a greater risk of degradation. In addition, it is preferred in the present invention to avoid the increased tendency of the pure block copolymers to crystallise, since this may hinder the migration of metal ions within the structure of the copolymer and may reduce its conductivity.

The poly(alkylene oxide) preferably constitutes from about 0.1 to about 80 wt%, preferably from about 5 to about 78 wt%, preferably from about 10 to about 75 wt%, preferably from about 12 to about 65 wt%, preferably from about 15 to about 60 wt%, preferably from about 16 to about 55 wt% by total weight of the copolyester.

Preferably, the poly(alkylene oxide) constitutes at least about 0.1 wt%, preferably at least about 5 wt%, preferably at least about 10 wt%, preferably at least about 12 wt%, preferably at least about 15 wt%, preferably at least about 16 wt%, preferably no more than about 80 wt%, preferably no more than about 78 wt%, preferably no more than about 75 wt%, preferably no more than about 65 wt%, preferably no more than about 60 wt%, preferably no more than about 55 wt% by total weight of the copolyester.

Where the copolyester comprises repeating units derived from a diol (preferably ethylene glycol), terephthalic acid and a poly(alkylene oxide), the poly(alkylene oxide) is preferably present in an amount of from about 5 to about 30 wt%, preferably from about 10 to about 25 wt%, preferably from about 15 to about 20 wt% of the total weight of the copolyester.

Where the copolyester comprises repeating units derived from a diol (preferably ethylene glycol), isophthalic acid and a poly(alkylene oxide), the poly(alkylene oxide) is preferably present in an amount of from about 35 to about 65 wt%, preferably from about 40 to about 60 wt%, preferably from about 45 to about 55 wt% of the total weight of the copolyester.

The amount of copolyester present in the copolyester film is preferably no more than about 99.9 wt% by total weight of the copolyester film, preferably no more than about 95 wt%, preferably no more than about 92 wt%, preferably no more than about 90 wt%. Preferably, the amount of copolyester present in the copolyester film is at least about 40% by total weight of the copolyester film, preferably at least about 50 wt%, preferably at least about 65 wt%, preferably at least about 80 wt%. Thus, the amount of copolyester present is preferably from about 40 wt% to about 99.9 wt%, preferably from about 50 wt% to about 95 wt%, preferably from about 65 wt% to about 92 wt%, preferably from about 80 to about 90 wt% by total weight of the copolyester film.

Said copolyester is preferably the only polyester present in the film.

The copolyester films of the present invention comprise a first metal-ion-containing component, which is selected from conductive ceramic particulate materials. Preferably, the copolyester films of the present invention comprise a first lithium ion-containing component, which is selected from conductive ceramic particulate materials. One or more conductive ceramic particulate materials may be present.

It will be appreciated by those skilled in the art that a ceramic material is an inorganic non-metallic solid comprising both metallic and non-metallic elements which is formed or densified by heating at high temperatures. Ceramic materials are typically hard, brittle and corrosion resistant, with low chemical reactivity and high melting points. The ceramic materials referred to herein may be crystalline or glassy. The ceramic particulate materials used in the present invention are conductive. The invention is primarily illustrated below in respect of lithium ion-containing conductive ceramic particulate materials, but the technical principles are generally applicable to other metal ion-containing conductive ceramic particulate materials.

Any suitable lithium ion-containing conductive ceramic particulate material may be used, particularly NASICON-type ceramic particulate materials (such as lithium ion-containing conductive glass ceramic particulate materials), LISICON-type ceramic particulate materials, perovskite-type oxide ceramic particulate materials, garnet-type oxide ceramic particulate materials, lithium phosphorus oxynitride (LIPON)-type ceramic particulate materials and lithium aluminium silicate (LAS) ceramic particulate materials.

As is known in the art, NASICON (sodium super ionic conductor) materials refer to a family of solids with the chemical formula $Na_{1+x}Zr_2Si_xP_{3-x}O_{12}$ where $0 < x < 3$, as well as analogous compounds where Na, Zr and/or Si are replaced by isovalent elements, and so in the context of the most preferred aspect of the present invention the sodium is replaced with lithium. Particularly suitable lithium-containing NASICON-type ceramic particulate materials may have the general formula $LiM_y(PO_4)_3$, where M denotes a multivalent metal ion. For example, M may be selected from one or more of Al, Si, Ti, Zr, Ge, Sn and Hf. Other suitable lithium-containing NASICON-type ceramic particulate materials may have the general formula $Li_{1+x}M_xTi_{2-x}(PO_4)_3$ (LATP), where M denotes a trivalent cation selected from one or more of Al, Sc, Y and La. Other suitable lithium-containing NASICON-type ceramic particulate materials may have the general formula $Li_{1+x}Al_xGe_{2-x}(PO_4)_3$ (LAGP), for example wherein x is 0.5.

Particularly suitable are lithium ion-containing conducting glass ceramic particulate materials which have a NASICON-structure. Preferred particulate materials are those commercially available under the tradename "LICGC" from Ohara Inc. A preferred particulate material is commercially available as LICGC™ PW-01 powder from Ohara Inc., which is understood as having a main crystalline phase of $Li_{1+x+y}Al_xTi_{2-x}Si_yP_{3-y}O_{12}$ and a composition of $Li_2O$-$Al_2O_3$-$SiO_2$-$P_2O_5$-$TiO_2$. A further preferred particulate material is commercially available as LICGC™ AG-01 from Ohara Inc., which is understood as having a main crystalline phase of $Li_{1+x+y}Al_x(Ti,Ge)_{2-x}Si_yP_{3-y}O_{12}$ and a composition of $Li_2O$-$Al_2O_3$-$SiO_2$-$P_2O_5$-$TiO_2$-$GeO_2$.

As is known in the art, LISICON (lithium super ionic conductor) materials refer to a family of solids with the chemical formula $Li_{2+2x}Zn_{1-x}GeO_4$. As with NASICON-type materials, other elements (typically isovalent elements) may replace the Li, Zn and/or Ge. Suitable LISICON-type particulate materials may be selected from $Li_{2+2x}Zn_{1-x}Ge_4O_{16}$, $Li_{14}ZnGe_4O_{16}$, $Li_{(3+x)}Ge_xV_{(1-x)}O_4$, $Li_{(4-x)}Si_{(1-x)}P_xO_4$, and thio-LISICONs such as those having the formula $Li_{(4-x)}Ge_{(1-x)}P_xS_4$ $Li_{10}GeP_2S_{12}$, where x is between 0 and 1.

Suitable perovskite-type oxide particulate materials may be selected from $Li_{3x}La_{(2/3)-x}TiO_3$ (LLTO) and $Li_{3x}La_{1/3-x}TaO_3$.

Suitable garnet-type oxide particulate materials may have the general formula $Li_{7-3y-x}La_3Zr_{2-x}M1_yM2_xO_{12}$ (where M1 denotes a trivalent cation such as Al and Ga, M2 denotes a pentavalent cation such as Nb and Ta, $x \geq 0$ and $y \leq 2$); $Li_5La_3M_2O_{12}$ (where M denotes Nb and/or Ta); $Li_6ALa_2M_2O_{12}$ (where A denotes Ca, Sr and/or Ba, and M denotes Nb or Ta); or $Li_{6.5}La_{2.5}Ba_{0.5}ZrTaO_{12}$.

Suitable LIPON-type ceramic particulate materials may have the general formula $Li_xPO_yN_z$, such as $Li_2PO_2N$.

Suitable LAS ceramic particulate materials may be selected from $AlLiO_6Si_2$.

With regard to sodium ion-containing ceramic particulate materials, particularly suitable are NASICON-type ceramic particulate materials (such as sodium ion-containing conductive glass ceramic particulate materials), beta-alumina and beta"-alumina phases $Na_2O.nAl_2O_3$ where $5 \leq n \leq 11$, sodium rare earth silicates, and Na-ion conducting oxyhalide glasses. Suitable NASICON-type ceramic particulate materials are NASICON-structured oxides, which may have the general formula $Na_3Zr_2Si_2PO_{12}$, $NaTi_2(PO_4)_3$, $NaGe_2(PO_4)_3$ or $Na_{1+x}[Sn_xGe_{2-x}(PO_4)_3]$. Suitable sodium rare earth silicates have the general formula $Na_5MSi_4O_{12}$, where M is Y, Sc, Lu and/or any trivalent rare earth cation. Suitable Na-ion conducting oxyhalide glass may be NaI-NaCl-$Na_2O$-$B_2O_3$.

Preferably, the volume distributed median particle diameter (equivalent spherical diameter corresponding to 50% of the volume of all the particles, read on the cumulative distribution curve relating volume % to the diameter of the particles - often referred to as the "Dv50" or "D50" value) of the conductive ceramic particulate material is in the range from 0.01 to 5 $\mu$m, preferably from 0.05 to 3 $\mu$m, preferably from 0.1 to 2 $\mu$m, preferably from 0.2 to 1.5 $\mu$m, preferably from 0.4 to 1.0 $\mu$m. The particle size may be measured by laser light diffraction (preferably Fraunhofer diffraction). A particularly preferred method utilises a Mastersizer (e.g. a 3000) available from Malvern. The median particle size may be determined by plotting a cumulative distribution curve representing the percentage of particle volume below chosen particle sizes and measuring the 50th percentile.

The amount of said metal ion-containing conductive ceramic particulate material present in the copolyester film is preferably no more than about 60 wt% by total weight of the copolyester film, preferably no more than about 50 wt%, preferably no more than about 35 wt%, preferably no more than about 20 wt%, and preferably at least about 0.1 wt%, preferably at least about 5 wt%, preferably at least about 8 wt%, preferably at least about 10 wt%. Thus, the amount of conductive ceramic particulate material present is preferably from about 0.1 wt% to about 60 wt%, preferably from about 5 wt% to about 50 wt%, preferably from about 8 wt% to about 35 wt%, preferably from about 10 to about 20 wt% by total weight of the copolyester film.

Said metal ion-containing conductive ceramic particulate material is held within the polymeric matrix of the film.

As described hereinabove, the copolyester films of the present invention preferably comprise additional metal

ions from one or more sources other than said conductive ceramic particulate material. Where the conductive ceramic particulate material is a lithium-ion containing conductive ceramic particulate material, the copolyester film preferably comprises additional lithium ions from one or more sources other than said conductive ceramic particulate material. Where the conductive ceramic particulate material is a sodium-ion containing conductive ceramic particulate material, the copolyester film preferably comprises additional sodium ions from one or more sources other than said conductive ceramic particulate material. These additional metal ions are referred to herein as the second metal ion component, for instance as the second lithium ion component or the second sodium ion component. It will be appreciated that said first metal ion-containing component and said second metal ion component are different from each other. The second metal ion component is preferably a metal ion-containing component selected from metal salts. The invention is primarily illustrated below in respect of lithium salts, but the technical principles are generally applicable to other metal salts materials.

Any suitable lithium salt may be used. One or more different types of lithium salts may be used. Preferably the lithium salts are selected from lithium salts suitable for use in lithium ion batteries, such as lithium bis(trifluoromethanesulfonyl)imide (LiTFSI), lithium hexafluorophosphate ($LiPF_6$), lithium tetrafluoroborate ($LiBF_4$), lithium thiocyanate (LiSCN), lithium hexafluoroarsenate ($LiAsF_6$), lithium trifluoromethanesulfonate ($LiCF_3SO_3$), lithium bromide (LiBr), lithium iodide (LiI), lithium bis(trifluoromethanesulfonimide) ($LiN(CF_3SO_2)_2$), lithium tris(trifluoromethylsulfonyl)methide ($LiC(CF_3SO_2)_3$). lithium orthosilicate, lithium trifluoroacetate ($LiCF_3CO_2$) and lithium bis(fluorosulfite)amide ($LiN(FO_2S)_2$).

When the copolyester film is formed using solvent casting techniques, it is preferred that the metal ion is derived from a metal salt which has high solubility in the solvent used in the solvent re-casting steps. Thus, in the case of lithium ion batteries, a particularly preferred lithium salt is lithium trifluoromethanesulfonate ($LiCF_3SO_3$).

The metal salts (including the preferred lithium salts) may be selected from:

(i) aromatic carboxylic acids, preferably aromatic dicarboxylic acids, preferably terephthalic acid or isophthalic acid;
(ii) aliphatic carboxylic acids, including aliphatic dicarboxylic acids, preferably acetic acid, glycolic acid or succinic acid;
(iii) carbonic acids;
(iv) phenolic acids, preferably salicylic acid;
(v) mineral acids, such as perchloric acid or phosphoric acid, particularly phosphoric acid; and
(vi) boric acids, preferably bis(oxalate)boric acid.

Optionally, the metal salts are selected from metal salts of (i) to (v) provided above.

Thus, suitable lithium salts include: dilithium terephthalate (DLTA), dilithium isophthalate, lithium glycolate, lithium benzoate, lithium acetate, lithium carbonate, lithium perchlorate, lithium orthosilicate, lithium phosphate, lithium salicylate, lithium succinate and lithium bis(oxalato)borate.

Preferably the metal salt is an organic metal salt.

In a preferred embodiment, the metal salt is the salt of the aromatic dicarboxylic acid from which the copolyester is derived. Thus, in the case of the preferred copolyesters derived from terephthalic acid, the lithium salt is preferably selected from mono- or di-lithium terephthalate, and preferably dilithium terephthalate. The inventors have found that dilithium terephthalate is particularly preferable for thermal stability and cost reasons. In the case of the preferred copolyesters derived from isophthalic acid, the lithium salt is preferably selected from mono- or di-lithium isophthalate, and preferably dilithium isophthalate.

Other preferred metal salts may be selected from the alkoxylate esters of the aforementioned acids, particularly the carboxylic acids, particularly the dicarboxylic acids, particularly the aromatic dicarboxylic acids, particularly terephthalic acid. Such alkoxylate esters are preferably derived from the aliphatic diols, preferably from $C_{2-10}$ aliphatic diols, preferably from $C_{2-6}$ aliphatic diols, preferably from $C_2$, $C_3$ or $C_4$ aliphatic diols, more preferably from ethylene glycol, 1,3-propanediol and 1,4-butanediol, more preferably from ethylene glycol.

A particularly suitable lithium salt has the formula (I) below, and is referred to herein as dilithium bis hydroxy ethyl terephthalate (DL-BHET):

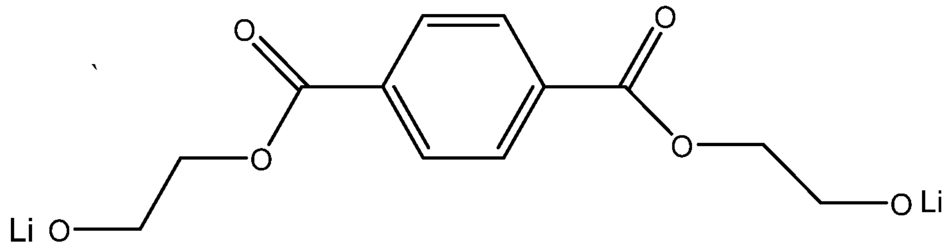

(I)

Preferably the lithium salt is selected from lithium trifluoromethanesulfonate ($LiCF_3SO_3$), dilithium terephthalate or dilithium bis hydroxy ethyl terephthalate. Preferably the lithium salt is selected from dilithium terephthalate.

With regard to the sodium-containing embodiment of the present invention, any suitable sodium salt may be used. One or more different types of sodium salts may be used. It will be appreciated that the preferences and elements described in respect of the lithium salt apply equally to the sodium salt, except that the lithium ions are replaced by sodium ions. Preferably, the sodium salt is selected from sodium nitrate (NaNOs), sodium perchlorate ($NaClO_4$), sodium tetrafluoroborate ($NaBF_4$), sodium hexafluorophosphate ($NaPF_6$), sodium bis(trifluoromethanesulfonyl)imide (NaTFSI), sodium bis(trifluoromethane)sulfonimide ($Na[N(CF_3SO_2)_2]$), sodium hexafluoroarsenate(V) ($NaAsF_6$), sodium bis(oxalatoborate) ("NaBOB"), sodium halides (NaX), where X=Cl, Br or I, sodium thiocyanate (NaSCN), sodium pentacyanopropenide (NaPCPI), sodium tetracyanopirolate (NaTCP) and sodium tricyanoimidazolate (NaTIM).

In one embodiment, the metal ions of said second metal ion component are present in and held within the polymeric matrix of the film by virtue of the interaction between the metal cations and the polarisable electronegative oxygen atoms of the copolyester, preferably at least the electronegative oxygen atoms of the polyalkylene oxide units.

In a preferred embodiment, the metal ions of said second metal ion component are held within the polymeric matrix of the film by virtue of the interaction between the metal cations and the anion of a metal salt. Thus, in this embodiment, the copolyester film comprises a metal salt. Preferably at least part, preferably at least 50 wt%, preferably at least 60 wt%, preferably at least 70 wt%, preferably at least 80 wt%, preferably at least 90 wt%, preferably at least 95 wt%, preferably at least 99 wt%, and preferably substantially all of the metal ions of said second metal ion component are in the form of a metal salt. The metal salt is preferably the metal salt from which the metal ions are derived. The metal salts are selected from the metal salts described above, and the preferences described above apply here. Thus, in this preferred embodiment, a metal salt is held within the polymeric matrix. In this embodiment, the metal salt is not part of the polymer backbone, i.e. it has not been polymerised into the copolyester. In other words, in this preferred embodiment, the anion of the metal salt is not covalently bound to the copolyester. In the preferred embodiment described above in which the metal salt is the salt of the same aromatic dicarboxylic acid from which the copolyester is derived, the metal -containing copolyester film described herein exhibits excellent thermal stability which is believed to result from the alignment of the morphology of the copolyester with the morphology of the metal salt.

The amount of metal ions of said second metal ion component in the copolyester film is preferably effective to provide a metal:O molar ratio of from about 5:1 to about 1:50, preferably from about 4: 1 to about 1:50, preferably from about 3: 1 to about 1:50, preferably from about 2:1 to about 1:50, preferably about 1:1 to about 1:40, preferably about 1:2 to about 1:30, preferably about 1:4 to about 1:25, wherein the number of O atoms in this ratio is defined as the number of O atoms in the poly(alkylene oxide) residues, and the number of metal atoms in this ratio is defined as the number of metal atoms provided by said additional metal ions (i.e. said second metal ion component, and excluding said first metal ion-containing component).

Preferably, the amount of the second metal ion component (i.e. preferably said metal salts) is no more than about 40 wt%, preferably no more than about 10 wt%, and preferably at least about 0.1%, preferably at least about 1%, and preferably from about 0.1 wt% to about 40 wt%, preferably from about 1 wt% to about 10 wt% by total weight of the copolyester film.

Where the copolyester films of the present invention comprise said second metal ion component, the total amount of the first metal ion-containing component and the second metal ion component is preferably no more than about 60 wt% by total weight of the copolyester film, preferably no more than about 50 wt%, preferably no more than about 35 wt%, preferably no more than about 20 wt%, and preferably at least about 0.1 wt%, preferably at least about 5 wt%, preferably at least about 8 wt%, preferably at least about 10 wt%. Thus, the total amount of the first metal ion-containing component and the second metal ion component present is preferably from about 0.1 wt% to about 60 wt%, preferably from about 5 wt% to about 50 wt%, preferably from about 8 wt% to about 35 wt%, preferably from about 10 to about 20 wt% by total weight of the copolyester film.

The copolyester, first metal ion-containing component and, where present, the second metal ion component are the major component of the film, and preferably make up at least about 65%, preferably at least about 75%, preferably

at least about 85%, preferably at least about 95%, and preferably at least about 98% by weight of the total weight of the film.

The copolyester film of the present invention may further comprise any other additive conventionally employed in the manufacture of polyester films. Thus, agents such as anti-oxidants, UV-absorbers, hydrolysis stabilisers, cross-linking agents, dyes, fillers, pigments, voiding agents, lubricants, radical scavengers, thermal stabilisers, flame retardants and inhibitors, anti-blocking agents, surface active agents, slip aids, gloss improvers, prodegradents, viscosity modifiers and dispersion stabilisers may be incorporated as appropriate. Such additives may be introduced into the copolyester composition in a conventional manner. For example, the additive(s) may be introduced by mixing with the monomeric reactants from which the film-forming copolyester composition is derived, or the additive(s) may be mixed with the copolyester composition by tumble or dry blending or by compounding in an extruder, followed by cooling and, usually, comminution into granules or chips. Masterbatching technology may also be employed.

In a preferred embodiment, the film comprises an anti-oxidant. A range of antioxidants may be used, such as antioxidants which function by trapping radicals or by decomposing peroxide. Suitable radical-trapping antioxidants include hindered phenols, secondary aromatic amines and hindered amines, such as TinuvinTM 770 (Ciba-Geigy). Suitable peroxide-decomposing antioxidants include trivalent phosphorous compounds, such as phosphonites, phosphites (e.g. triphenyl phosphate and trialkylphosphites) and thiosynergists (e.g. esters of thiodipropionic acid, such as dilauryl thiodipropionate). Hindered phenol antioxidants are preferred. A particularly preferred hindered phenol is tetrakis-(methylene 3-(4'-hydroxy-3', 5'-di-t-butylphenyl propionate) methane, which is commercially available as IrganoxTM 1010 (Ciba-Geigy). Other suitable commercially available hindered phenols include IrganoxTM 1035, 1076, 1098 and 1330 (Ciba-Geigy), SantanoxTM R (Monsanto), CyanoxTM antioxidants (American Cyanamid) and GoodriteTM antioxidants (BF Goodrich). The concentration of antioxidant present in the film is preferably in the range from 50 ppm to 5000 ppm, more preferably in the range from 300 ppm to 1500 ppm, particularly in the range from 400 ppm to 1200 ppm, and especially in the range from 450 ppm to 600 ppm based on the weight of the copolyester. A mixture of more than one antioxidant may be used, in which case the total concentration thereof is preferably within the aforementioned ranges. Incorporation of the antioxidant into the copolyester may be effected by conventional techniques, and preferably by mixing with the monomeric reactants from which the copolyester is derived, particularly at the end of the direct esterification or ester exchange reaction, prior to polycondensation.

In a further preferred embodiment, the film comprises an inorganic particulate filler, preferably selected from metalloid oxides (such as alumina, titania, zirconia, zinc oxide, talc and silica), calcined china clay, alkaline metal salts (such as the carbonates and sulphates of calcium and barium) and non-conductive ceramic particulate materials. The inorganic particulate filler should have a particle size which is smaller than the film thickness, and preferably the particle size is no more than 10μm, preferably no more than about 5μm, preferably no more than about 2μm, preferably in the range of from about 0.5μm to about 2.0μm. It will be appreciated that the identity of said inorganic particulate filler (or indeed any other of said conventional additives) is a different entity from the first or second metal ion-containing components described hereinabove. In particular, said inorganic particulate filler (or any other of said conventional additives) does not contain the metal ion of the first or second metal ion-containing components described hereinabove, and hence said inorganic particulate fillers are referred to herein as "passive fillers" because they are not capable of direct transport of said metal ion. Nevertheless, such passive fillers have been found surprisingly to enhance the ionic conductivity generated by said first or second metal ion-containing components.

Thus, in a preferred embodiment of the first aspect of the invention, there is provided a copolyester film comprising a copolyester which comprises repeating units derived from a diol, a dicarboxylic acid and a poly(alkylene oxide), wherein the copolyester film further comprises a first metal ion-containing component selected from conductive ceramic particulate materials, wherein said first metal ion-containing component is a lithium ion-containing component or a sodium ion-containing component, wherein the copolyester film further comprises a passive filler.

And in a further preferred embodiment of the first aspect of the invention, there is provided a copolyester film comprising a copolyester which comprises repeating units derived from a diol, a dicarboxylic acid and a poly(alkylene oxide), wherein the copolyester film further comprises a first metal ion-containing component selected from conductive ceramic particulate materials, wherein said first metal ion-containing component is a lithium ion-containing component or a sodium ion-containing component, wherein the copolyester film further comprises a passive filler, wherein the film further comprise additional metal ions from one or more sources other than said conductive ceramic particulate material and other than said passive filler, and wherein, when present, the metal of said additional metal ions is the same as the metal of said first metal ion-containing component.

Inorganic particulate fillers have routinely been added into polyester films in order to improve handling and windability during manufacture and downstream processing, and for such purposes the fillers are typically used in relatively minor amounts, generally such that the total weight of filler is not more than about 2.5%, preferably not more than about 2.0%, preferably not more than about 1.0%, more typically no more than about 0.6% and preferably no more than about 0.3% by weight, based on the total weight of the copolyester film. However, in the present invention, the passive filler is preferably used in amounts of at least 5 wt%, preferably at least about 7 wt%, preferably at least about 10 wt%, and preferably from about 5 wt% to about 20 wt%, preferably from about 7 wt% to about 20 wt%, preferably

from about 7 wt% to about 15 wt%, by total weight of the copolyester film.

Where the film is formed via melt extrusion, the melt viscosity of the metal ion-containing copolyester from which the film is derived is preferably at least about 100 Pa.s, preferably not more than about 1000 Pa.s, preferably not more than about 500 Pa.s, preferably not more than about 300 Pa.s, preferably not more than about 250 Pa.s, and preferably about 150 Pa.s, at the desired processing temperature. Typical processing temperatures at which the copolyester should exhibit such melt viscosities are those used in the manufacture of the film described herein, and are preferably in the range of 200 to 290°C, particularly 220 to 280°C, and preferably at 275°C, and/or wherein the copolyester exhibits such melt viscosities at a temperature within the range of $T_M$ to $T_M$+10°C wherein $T_M$ is the crystalline melting temperature of the copolyester. A melt viscosity which is too high can lead to difficulties in film manufacture and/or reduce the molecular weight of the final copolyester and/or increase the cost of film manufacture, for instance because of the need to utilise specialised film-forming equipment. In addition, a melt viscosity which is too high may require a reduction in the output rate of the extruder, thereby decreasing the efficiency and economy of manufacture, or require an increase to the extrusion temperature in order to reduce the viscosity of the melt (which in turn can lead to thermal degradation of the polymer and the loss of associated properties), in order to achieve stable film production. A melt viscosity which is too low can lead to difficulties in reliable film formation and stretching.

The copolyester films described herein are preferably oriented copolyester films, preferably biaxially oriented copolyester films.

The copolyester films described herein are preferably self-supporting films, i.e. they are capable of independent existence in the absence of a supporting base.

The thickness of the film is preferably at least about 5 μm, preferably at least about 10 μm, preferably at least about 15 μm, and preferably at least about 20 μm. The thickness of the film is preferably no more than about 200 μm, preferably no more than about 150 μm, preferably no more than about 100 μm, preferably no more than about 85 μm, preferably no more than about 70 μm, preferably no more than about 50 μm, and preferably no more than about 35 μm. Thus, the thickness of the film is preferably from about 5 μm to about 200 μm, preferably from about 5 μm to about 150 μm, preferably from about 10 μm to about 100 μm, preferably from about 10 μm to about 85 μm, preferably from about 15 μm to about 70 μm, preferably from about 15 μm to about 50 μm and preferably from about 20 μm to about 35 μm.

Preferably the through-film ionic conductivity of the film is at least about $10^{-7}$ S/cm, preferably at least about $10^{-6}$ S/cm measured at 25°C.

Preferably the through-film ionic conductivity of the film is at least about $10^{-7}$ S/cm, preferably at least about $10^{-6}$ S/cm, preferably at least about $10^{-5}$ S/cm measured at 60°C.

The film should have low shrinkage, preferably less than 20%, preferably less than 15%, preferably less than 10% after 30 mins at 100°C. Preferably low shrinkage values are exhibited in both (orthogonal) dimensions of the film (i.e. the machine and transverse dimensions).

Preferably the crystalline melting point ($T_m$) of the film is greater than 175°C, preferably greater than 200°C, preferably greater than 210°C, preferably greater than 220°C, and these temperatures are particularly preferred for a PET-based copolyester. In comparison, polyolefin films conventionally used as microporous separators for lithium-ion, batteries typically have a crystalline melting point ($T_m$) of about 130°C to 150°C. This relative increase in $T_m$ is advantageous as the films described herein are therefore suitable for applications which require higher operating temperatures. Preferably the crystalline melting point ($T_m$) of the film is not more than 270°C.

Preferably, the film of the present invention exhibits a glass transition temperature ($T_g$) of no more than about 50°C, preferably no more than about 45°C, preferably no more than about 40°C. In the present invention, a lower $T_g$ is preferred since it promotes greater conductivity at the operating temperature of the film in the preferred end-use described herein. The films of the present invention typically exhibit a $T_g$ of at least about -50°C, preferably of at least about -30 °C and preferably of at least about -10°C.

The films described herein are particularly suitable as solid separators in a metal-ion rechargeable battery, particularly a dry-cell battery, also referred to herein as a solid-state battery.

According to a **second** aspect of the invention, there is provided a method of manufacturing a polyester film as defined in the first aspect herein, wherein said method comprises the steps of:

(i) reacting said diol with said dicarboxylic acid or an ester thereof (suitably a lower alkyl ($C_{1-4}$) ester, preferably the dimethyl ester), to form a bis(hydroxyalkyl)-ester of said dicarboxylic acid;

(ii) polymerising in a polycondensation reaction said bis(hydroxyalkyl)-ester of said dicarboxylic acid in the presence of an poly(alkylene oxide) to form a copolyester;

(iii) introducing said first metal ion-containing component selected from conductive ceramic particulate materials, and optionally said additional metal ions from one or more sources other than said conductive ceramic particulate materials, during synthesis of the copolyester in steps (i) and/or (ii), and/or during a subsequent separate compounding or mixing step, to form a copolyester composition; and

(iv) forming a copolyester film from said copolyester composition, preferably by melt-extruding said composition or

by solvent-casting a dispersion or solution comprising said copolyester composition.

The copolyesters described herein can be synthesised according to conventional techniques for the manufacture of polyester materials. Thus, the copolyester may be made by a first step of direct esterification or trans-esterification, followed by a second step of polycondensation. In the direct esterification embodiment, the diol and dicarboxylic acid are reacted directly, typically under elevated temperature (typically about 150 to 260°C) and pressure (typically about 40 psi) in the presence of a base (e.g. sodium hydroxide), and with the water by-product of the direct esterification reaction being distilled off, to form a bis(hydroxyalkyl)carboxylate. Once the direct esterification reaction is complete, a stabiliser (e.g. phosphoric acid) is added to neutralise the base. In an alternative embodiment, the copolyester is prepared by the trans-esterification route, which preferably comprises heating an ester of the dicarboxylic acid (suitably a lower alkyl ($C_{1-4}$) ester, preferably the dimethyl ester) with a molar excess of the diol at elevated temperature (typically in the range of about 150 to 260°C) in the presence of a basic esterification catalyst (e.g. manganese (II) acetate tetrahydrate, $Mn(OAc)_2 \cdot 4H_2O$), and with the methanol by-product of the trans-esterification reaction being distilled off, to form a bis(hydroxyalkyl)carboxylate. Polymerisation is effected in a polycondensation step which is conducted using an appropriate catalyst, usually antimony trioxide, at elevated temperature (typically about 290 °C) and typically under reduced pressure (for instance about 1mm Hg), with continuous distillation of by-product(s). The poly(alkylene oxide) may be present at the start of the synthetic procedure, since the dicarboxylic acid or dicarboxylic acid ester starting material typically reacts selectively with the diol rather than the poly(alkylene oxide), particularly as the molecular weight of the poly(alkylene oxide) increases. Preferably, however, the poly(alkylene oxide) is added at the start of the polycondensation step.

Preferably, the synthetic procedure further comprises a solid phase polymerisation (SSP) step to increase the molecular weight of the copolyester and increase and/or complete the polymerisation of the poly(alkylene oxide) into the copolyester.

Thus, the product of the polycondensation reaction (step (ii)) is preferably subjected to an SSP step. The solid phase polymerisation may be carried out in a fluidised bed, e.g. fluidised with nitrogen, or in a vacuum fluidised bed, using a rotary vacuum drier. Suitable solid phase polymerisation techniques are disclosed in, for example, EP-A-0419400. Thus, SSP is typically conducted at a temperature which is 10-50 °C below the crystalline melting point ($T_M$) of the polymer but higher than the glass transition temperature ($T_g$) (or where the copolyester exhibits multiple glass transition temperatures, higher than the highest glass transition temperature). An inert atmosphere of dry nitrogen or a vacuum is used to prevent degradation. In a preferred embodiment, solid phase polymerisation is carried out over 16 hours at 220°C under vacuum.

The first metal ion-containing component and optional second metal ion-containing component may be introduced into the copolyester independently or together. When introduced independently, the first metal ion-containing component and second metal ion-containing component may be introduced simultaneously or sequentially. Where either or both of the first and second metal ion-containing component(s) contain a plurality of different compounds, said plurality of compounds may be introduced into the copolyester independently or together, and when introduced independently they may be introduced simultaneously or sequentially.

In one embodiment, referred to herein as **Embodiment A1**, the first and second metal ion-containing components are introduced into the copolyester during synthesis of the copolyester in steps (i) and/or (ii). Preferably, the first and second metal ion-containing components are added to one or more of the reactant(s) or reaction mixture at the start of the synthetic procedure. Alternatively, the first and second metal ion-containing components are added to the reaction product of the direct esterification or trans-esterification step (i), and before the polymerisation stage (ii).

In a second embodiment, referred to herein as **Embodiment A2,** the first and second metal ion-containing components are introduced into the copolyester during a separate compounding or mixing step.

In a third embodiment, referred to herein as **Embodiment A3,** the first and second metal ion-containing components are introduced into the copolyester during different steps. For instance, the second metal ion-containing component is introduced during synthesis of the copolyester in steps (i) and/or (ii) (and preferably added to one or more of the reactant(s) or reaction mixture at the start of the synthetic) and the first metal ion-containing component is introduced during a separate compounding or mixing step.

Formation of the film may be effected by conventional melt-extrusion techniques well-known in the art. In general terms the process comprises the steps of extruding a layer of polymer at a temperature within a range appropriate to the melting temperature thereof, for instance in a range of from about 250 to about 300°C (or, typically, no more than about 10°C higher than the crystalline melting point of the polymer), quenching the extrudate and preferably orienting the quenched extrudate.

Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. Biaxial orientation may be effected by simultaneous orientation or by sequential orientation. Preferably simultaneous orientation is effected.

Simultaneous biaxial orientation may be effected, for instance, in a tubular process by extruding a thermoplastics polyester tube which is subsequently quenched, reheated and then expanded by internal gas pressure to induce transverse orientation, and withdrawn at a rate which will induce longitudinal orientation. Particularly suitable simultaneous biaxial orientation processes are disclosed in EP-2108673-A and US-2009/0117362-A1.

Another preferred technique is a flat film process in which the film-forming polyester is extruded through a slot die and rapidly quenched upon a chilled casting drum to ensure that the polyester is quenched to the amorphous state. Orientation is then effected by stretching the quenched extrudate in at least one direction at a temperature above the glass transition temperature(s) of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus.

Stretching is generally effected so that the dimension of the oriented film is from 2 to 7, preferably from 2 to 5, more preferably 2.5 to 4.5, more preferably 3.0 to 4.5, more preferably 3.5 to 4.5 times its original dimension in the or each direction of stretching. Stretching is conventionally effected at temperatures higher than the $T_g$ of the copolyester composition, preferably at least about 5°C higher, preferably at least about 15°C higher than the $T_g$, and preferably in the range of from about $T_g$+5°C to about $T_g$+75°C, preferably from about $T_g$+5°C to about $T_g$+30°C. Typically, stretching is effected at temperatures in the range of about 5 to about 155°C, preferably about 5 to about 110°C. Greater draw ratios (for example, up to about 8 times) may be used if orientation in only one direction is required. It is not necessary to stretch equally in the machine and transverse directions although this is preferred if balanced properties are desired.

Preferably, a simultaneous biaxial stretching process is used, which is particularly advantageous for making the thin films of the present invention.

A stretched film may be, and preferably is, dimensionally stabilised by heat-setting under dimensional support at a temperature above the glass transition temperature(s) of the copolyester but below the melting temperature ($T_M$) thereof, to induce the desired crystallinity of the copolyester. During the heat-setting, a small amount of dimensional relaxation may be performed in the transverse direction (TD) and/or machine direction (MD). The dimensional relaxation of up to 10%, more typically up to about 8%. Dimensional relaxation in the transverse direction is referred to in the art as "toe-in", and typically involves a dimensional shrinkage of up to about 5%, typically from about 2 to about 4%. Dimensional relaxation in the machine direction may be effected by conventional techniques, although it is a relatively more difficult process to achieve since low line tensions are required particularly in a sequential orientation process. For this reason, a simultaneous orientation process is preferably used where MD relaxation is desired and, in this embodiment, simultaneous relaxation in the MD and TD is typically effected. The actual heat-set temperature and time will vary depending on the composition of the film and its desired final thermal shrinkage but should not be selected so as to substantially degrade the toughness properties of the film such as tear resistance. Within these constraints, preferred films are heat-set at a temperature from about 80°C less than the melting temperature of the film (i.e. $T_M$-80°C) to about 10°C less than $T_M$ (i.e. $T_M$-10°C), preferably from about $T_M$-70°C to about $T_M$-20°C. Thus, the heat-set temperature is suitably in the range of from about 130 to about 245°C, preferably from about 150 to about 245°C, and preferably at least 180°C, preferably in the range of 190 to 230°C. After heat-setting the film is typically quenched rapidly in order induce the desired crystallinity of the copolyester.

The film may be further stabilized through use of an in-line relaxation stage, particularly where the film has been oriented in a sequential orientation process. Alternatively the relaxation treatment can be performed off-line. The relaxation of the film is between 0% and 10%, preferably 5%. In this additional step, the film is heated at a temperature lower than that of the heat-setting stage, and with a much reduced MD and TD tension. For a relaxation process which controls the film speed, the reduction in film speed (and therefore the strain relaxation) is typically in the range 0 to 2.5%, preferably 0.5 to 2.0%. There is no increase in the transverse dimension of the film during the heat-stabilisation step. The temperature to be used for the heat stabilisation step can vary depending on the desired combination of properties from the final film, with a higher temperature giving better, i.e. lower, residual shrinkage properties. A temperature of 135 to 250 °C is generally desirable, preferably 150 to 230 °C, more preferably 170 to 200°C. The duration of heating will depend on the temperature used but is typically in the range of 10 to 40 seconds, with a duration of 20 to 30 seconds being preferred. This heat stabilisation process can be carried out by a variety of methods, including flat and vertical configurations and either "off-line" as a separate process step or "in-line" as a continuation of the film manufacturing process. Film thus processed will exhibit a smaller thermal shrinkage than that produced in the absence of such post heat-setting relaxation.

Advantageously, the film may be and preferably is manufactured in air, i.e. wherein the film is not manufactured (including the steps of extrusion, casting and stretching) under the atmosphere of an inert gas (such as nitrogen or a noble gas such as argon). Thus, the copolyester compositions and films described herein are surprisingly thermally stable, and do not require any special handling conditions, in particular an inert atmosphere, during manufacture or storage.

As an alternative to forming the film by melt-extrusion, the copolyester film may be formed by conventional

solvent casting techniques well-known in the art. In general terms, the process comprises forming a film from a dispersion comprising said copolyester, said first metal ion-containing component, said optional second metal ion-containing component and a solvent. Suitable solvents include N-methyl-2-pyrrolidone (NMP), acetonitrile (ACN), tetrahydrofuran (THF), dimethylformamide (DMF), dimethyl sulfoxide (DMSO), dimethyl carbonate (DMC), ethylene carbonate (EC), propylene carbonate (PC), dimethoxyethane (DME), methyl formate ((MF), nitromethane (NM), diethyl carbonate (DEC), toluene, water, ethanol, acetone, isopropyl alcohol, methanol, ethyal alcohol and ethyal acetate.

The type of mixing vessel, duration of the dispersion step and temperature of the dispersion step will vary depending on the type of copolyester and solvent used. Typically, the temperature used is between about 22°C and about 100°C. Typically, the duration of the dispersion step will be several hours, for example between about 6 hours and 48 hours, between about 10 hours and 30 hours, between about 12 hours and 24 hours.

The first metal ion-containing component and optional second metal ion-containing component may already be present in the copolyester which is contacted with the solvent to form said dispersion. Alternatively, the first and second metal ion-containing components may be mixed with the copolyester dispersion, and in this embodiment said first and second metal ion-containing components may be introduced to said dispersion independently or together. When introduced independently, the first and second metal ion-containing components may be introduced simultaneously or sequentially. Where either or both of the first and second metal ion-containing components contain a plurality of different compounds, said plurality of compounds may be introduced independently or together, and when introduced independently they may be introduced simultaneously or sequentially.

The dispersion is then cast into a film on a support base. The cast film is then suitably dried in order to remove residual solvent. Typically, the cast film is dried at a temperature of from about 50°C to about 170°C, preferably from about 80°C to 160°C. It will be appreciated that the drying step may comprise multiple (e.g. at least two) drying steps across different temperature zones in order to reduce the amount of residual solvent. Once dried, the cast copolyester film may be removed from the support base for subsequent processing, for instance by incorporating into the battery, for instance as a separator.

If desired, a film prepared by solvent casting may also be subjected to orientation and dimensional stabilisation, as described hereinabove.

In other methods of film manufacture, the film-forming copolyester composition is cast onto a support base which itself is a component of the battery and in particular an electrode, i.e. the cast film is formed *in situ* during battery manufacture. This method of manufacture is of particular utility in the solvent-casting method, but is not limited thereto and may also be used for an extrusion method of film formation. Thus, in this embodiment, the separator of the battery is formed *in situ* by casting the copolyester film onto an electrode during battery manufacture. In that case, the composite structure of electrode and cast copolyester film then undergoes subsequent processing to manufacture the battery.

It will be appreciated that the preferences and elements described in respect of the first aspect apply equally to the second aspect.

The present invention further provides a film made by the method of the second aspect.

According to a **third** aspect, there is provided a metal-ion battery (particularly a lithium-ion battery) comprising the copolyester film as described herein, wherein said battery comprises an anode, a cathode and a separator between the anode and the cathode, wherein said separator is the copolyester film as described herein.

During use and operation of the battery, the metal ions present in the copolyester film are mobile, enabling the separator to exhibit the required ionic conductivity between the electrodes.

Preferably, the metal-ion battery is a solid-state battery (also referred to herein as a dry-cell battery). Alternatively, the metal-ion battery further comprises a liquid or gel electrolyte, typically referred to in the art as a wet-cell battery. It will be appreciated by those skilled in the art that the metal-ion battery is a rechargeable battery.

Preferably, the metal-ion battery further comprises an anode current collector and a cathode current collector.

Any suitable anode, anode current collector, cathode and cathode current collector, as conventional in the art, may be used.

Suitable anodes include graphite and/or lithium titanate (LTO).

Suitable cathodes include lithium or mixed oxides of lithium and other metal(s), particularly lithium titanate (LTO), lithium iron phosphate ($LiFePO_4$, also known as LFP) and/or lithium-nickel-manganese-cobalt oxide ($LiNiMnCoO_2$, also known as NMC).

Suitable anode and/or cathode current collectors are disclosed in, for example, UK application no. 2106834.1. In particular, said anode current collector and/or said cathode current collector may be independently selected from current collectors comprising a biaxially oriented polymeric substrate layer (preferably wherein the polymeric substrate layer is polyester, preferably PET or PEN) and a first metal layer on a side of the polymeric substrate layer, wherein the polymeric substrate layer exhibits positive thermal expansion (preferably from greater than 0% to no more than 3.0%, preferably from 0.1% to 2.0%, preferably from 0.2% to 1.5%) in air at 200°C in each of the transverse direction (TD) and machine direction (MD), wherein the polymeric substrate layer has a thickness of no more than 12 μm (preferably 1.0 to 12.0 μm, preferably 2.0 to 8.0 μm, preferably 4.0 to 8.0 μm, preferably 4.0 to 6.0 μm), and wherein the first metal

layer has a thickness of no more than 1000 nm, and preferably wherein the current collector further comprises a second metal layer, wherein the first metal layer and the second metal layer are on opposing sides of the polymeric substrate layer and wherein the second metal layer independently has a thickness of no more than 1000 nm. Preferably, the thickness of the first metal layer and, where present, the second metal layer is each independently from 50 nm to 1000 nm, preferably from 100 nm to 1000 nm, preferably from 100 nm to 800 nm, preferably from 150 nm to 700 nm. The first metal layer and, where present, the second metal layer suitably each independently exhibits isotropic thermal expansion in air at 200°C of from greater than 0% to no more than 1.0%, preferably from 0.25% to 0.75%, preferably from 0.3% to 0.5%, preferably wherein the first metal layer and the second metal layer exhibit the same thermal expansion at 200°C as each other. The first metal layer and, where present, the second metal layer each independently comprise at least one of aluminium, copper, nickel, titanium, silver, nickel-copper alloy, or aluminium-zirconium alloy, and preferably wherein the first and second metal layers are selected from the same material, and preferably wherein the first and second metal layers are both either aluminium or copper. Such current collectors preferably exhibit one or more of the following properties:

(i) an adhesion strength between a metal layer and the polymeric substrate layer of least 600 g/25mm, preferably at least about 700 g/25 mm, preferably at least about 800 g/25mm.
(ii) a sheet resistance of from 0.01 $\Omega sq^{-1}$ to 2.0 $\Omega sq^{-1}$, preferably from 0.02 $\Omega sq^{-1}$ to 2.5 $\Omega sq^{-1}$, preferably from 0.02 $\Omega sq^{-1}$ to 2.0 $\Omega sq^{-1}$, preferably from 0.02 $\Omega sq^{-1}$ to 1.5 $\Omega sq^{-1}$, preferably from 0.05 $\Omega sq^{-1}$ to 1.0 $\Omega sq^{-1}$.
(iii) a breakdown current of no more than about 30 A and/or a breakdown temperature of no more than about 300°C.

Such preferred current collectors may be made by a method which comprises the steps of (I) forming a biaxially oriented polymeric substrate layer, and (II) depositing a metal on one or both surfaces of said substrate layer to form a metal layer (preferably using thermal evaporation deposition, electron beam evaporation deposition or virtual cathode deposition). Preferably step (I) comprises the following stages, in order:

(1) extruding a layer of molten polymer, subjecting the extrudate to biaxially stretching at a temperature above the glass transition temperature(s) of the polymer, preferably wherein said biaxial stretching is simultaneous biaxial stretching, and preferably stretching is effected so that the dimension of the oriented film is 2 to 5 times its original dimension in each direction of stretching;
(2) dimensionally stabilising a biaxially stretched film by annealing under dimensional support at a temperature above the glass transition temperature(s) of the polymer but below the melting temperature ($T_M$) thereof, preferably wherein the annealing temperature is in the range of from $T_M$-80°C to $T_M$-10°C, and preferably in the range of from 200 to 245°C, preferably in the range of from 220 to 240°C;
(3) subjecting an annealed biaxially stretched film to dimensional relaxation, preferably simultaneous dimensional relaxation, in both the transverse direction and machine direction, and wherein the degree of relaxation is from 0.5 to 5.0%, preferably from 1.0 to 4.0%, preferably from 1.0 to 3.0%, preferably from 1.0 to 2.0% in each of the transverse and machine directions, preferably wherein the degree of relaxation in the machine and transverse directions are the same, preferably wherein the temperature of the relaxation step is no higher than that of a preceding annealing step, and preferably from 200°C to 240°C, preferably from 210°C to 230°C, preferably from 215°C to 230°C;.
(4) optionally a second relaxation step which is conducted at a lower temperature than the preceding relaxation step, preferably at least 5°C lower, and preferably in the range of from 195°C to 230°C, preferably from 195°C to 220°C.
(5) optionally subjecting an exposed surface of the polymeric substrate layer to a surface-modifying treatment, wherein said treatment step occurs after step (I) and prior to step (II), preferably wherein said treatment comprises subjecting the exposed surface of the polymeric substrate layer to a plasma treatment, preferably corona discharge.

It will be appreciated that the term "metal" in the metal layers of said preferred current collectors is used in a context which is distinct and independent from the use of the term "metal" as used in the context of the separators and batteries in the remainder of the present disclosure. In particular, the identity of the metal layer in a current collector is independent from the identity of the metal ions in the separator and the identity of the metal-ion battery (i.e. whether the metal ion battery is a lithium ion battery or a sodium ion battery etc.).
The preferences and elements described in respect of the first and second aspects apply equally to the third aspect.
According to a **fourth** aspect there is provided the use of the copolyester film as described herein as a separator in a battery, preferably in a metal-ion battery, preferably in a lithium-ion battery.
The preferences and elements described in respect of the first to third aspects apply equally to the fourth aspect.
According to a **fifth** aspect of the invention, there is provided a method of manufacturing a metal-ion battery comprising the copolyester film as described herein, the method comprising the steps of:

(a) providing the copolyester film as described herein;

(b) assembling the metal-ion battery, wherein the battery comprises an anode, a cathode and a separator between the anode and the cathode, wherein said separator is the copolyester film obtained from step (a).

The preferences and elements described in respect of the first to fourth aspects apply equally to the fifth aspect.

***Property Measurement***

The following test methods were used to characterise the properties of the copolyester films, separators and batteries described herein.

(i) ***Glass transition temperature ($T_g$), crystalline temperature ($T_c$) and crystalline melting point ($T_m$)*** These thermal parameters were measured by differential scanning calorimetry (DSC) using a PerkinElmer HyperDSC 8500. Unless otherwise stated, measurements were made according to the following standard test method and based on the method described in ASTM E1356-98. The sample was maintained under an atmosphere of dry nitrogen for the duration of the scan. A flow rate of 20 ml $min^{-1}$ and Al pans were used. Samples (5 mg) were initially heated at 20 °C $min^{-1}$ from 20 °C to 350 °C in order to erase the previous thermal history (1st heating scan). After an isothermal hold at 350 °C for 2 min, samples were cooled at 20 °C $min^{-1}$ to 20 °C (1st cooling scan). Samples were then reheated at 20 °C $min^{-1}$ to 350 °C (2nd heating scan). Values of $T_g$ and $T_M$ were obtained from 2nd heating scans. As is well known, the glass transition temperature of a polymer is the temperature at which it changes from a glassy, brittle state to a plastic, rubbery state. The value of a $T_g$ was determined as the extrapolated onset temperature of the glass transition observed on the DSC scans (heat flow (W/g) against temperature (°C)), as described in ASTM E1356-98. It will be appreciated that the copolyesters of the present invention may be associated with two $T_g$ values, one $T_g$ for the soft segments and one $T_g$ for the hard segments. The values of $T_c$ and $T_m$ were determined from the DSC scans as the peak exotherm or endotherm of the transition.

(ii) ***Melt viscosity***

The term "melt viscosity" as used herein means the complex viscosity of a polymer measured at a particular melt temperature and a particular frequency of oscillation. The complex viscosity was measured by rotational rheology testing using a TA Instruments DHR-1 according to the following test method. Polymer samples (2.5g) were dried under dynamic vacuum at 140 °C for 16 h. The samples were then held between 2 x 25 mm diameter parallel plates and heated to the required temperature under a nitrogen atmosphere. Analysis of the complex viscosity of the polymer was performed via a temperature ramp method, whereby samples were heated at a rate of 4°C $min^{-1}$, at constant strain (5%) and angular frequency (10 rad $s^{-1}$).

(iii) ***Through-film ionic conductivity (dry cell setup (solid state))***

The through-film ionic conductivity of film samples with no additional electrolyte present, i.e. in the dry cell setup (solid state), was determined by Electrochemical Impedance Spectroscopy (EIS). Dry coin cells having a diameter of 12 mm were constructed. Dry coin cells having a diameter of 12 mm were constructed. Symmetric Al/Al dry coin cells with 1 $\times$ 1 mm spacers were constructed at a dew point of < 40 °C in an argon glove box. AC impedance spectra were obtained using a AutoLab unit under open circuit voltage (OCV) in the AC frequency range from 100 mHz to 1 MHz at an operating temperature of the battery (within the range of about 25°C and about 75°C, and at ambient temperature (25°C) unless otherwise specified) following a perturbation voltage of 10 mV. A Nyquist impedance plot was generated and the x-axis intercepts used to calculate resistance values (in ohms) for the resistance $R_1$ of the coin cell components (in ohms) and the bulk resistance $R_2$ of the separator (it will be appreciated that the separator has the relatively higher resistance value of the two values generated form the Nyquist plot). The through-film ionic conductivity ($\sigma$) of the film separator was calculated from the bulk resistance $R_2$ using the formula':

$$\sigma = \frac{1}{R_2}\frac{d}{A}$$

where $d$ is the film sample thickness (in cm) and $A$ is the area of the film (in $cm^2$) contacting the electrodes. It will be appreciated that the area of the film refers to the total film area, i.e. the total area of both sides of the film contacting the Al electrodes. The ionic conductivity is expressed in Siemens/cm, usually in the form of its logarithm (base 10).

(iv) ***Molecular weight ($M_N$)***

GPC measurements were performed on a Malvern/Viscotek TDA 301 using an Agilent PL HFIPgel guard column plus 2 $\times$ 30 cm PL HFIP gel columns. A solution of HFIP with 25 mM NaTFAc was used as eluent, with a nominal flow rate of 0.8 mL $min^{-1}$. All experimental runs were conducted at 40 °C, employing a refractive index detector. Molecular weights are referenced to polymethylmethacrylate calibrants. Data capture and subsequent data analysis

were carried out using Omnisec software. Samples were prepared at a concentration of 2 mg $mL^{-1}$, with 20 mg of sample dissolved in 10 mL eluent. These solutions were stirred for 24 h at room temperature and then warmed at 40 °C for 30 mins to fully dissolve the polymer. Each sample was filtered through a 0.45 μm polytetrafluoroethylene membrane prior to injection. Determination of $M_W$ may also be made using such a measurement. Once the $M_W$ and $M_N$ values are known, the PDI may be determined.

(v) ***Thermal shrinkage***

Shrinkage was assessed for film samples (preferably having dimensions 200mm × 10 mm) which were cut in specific directions relative to the machine and transverse directions of the film and marked for visual measurement. The longer dimension of the sample (i.e. the 200mm dimension) corresponds to the film direction for which shrinkage is being tested, i.e. for the assessment of shrinkage in the machine direction, the longer dimension of the test sample is oriented along the machine direction of the film. After heating the specimen to the predetermined temperature (by placing in a heated oven at that temperature) and holding for the predetermined interval, it was cooled to room temperature and its dimensions re-measured manually. The thermal shrinkage was calculated and expressed as a percentage of the original length.

(vi) ***Level of poly(alkylene oxide) in the copolyester***

1H NMR spectroscopy was used to determine the level of poly(alkylene oxide) in the copolyester, using an ECS400 spectrometer at 80°C, referenced to residual solvent ($d_2$-TCE (1,1,2,2-tetrachloroethane)) resonances.

(vii) ***Expansion of the biaxially oriented polymeric layer (of the preferred current collector)***

A sample of the biaxially oriented polymeric layer of the preferred current collector having dimensions of 5 mm × 8 mm was subjected to thermomechanical analysis using a thermomechanical analyser (TMA Q400 by TA Instruments Inc.). The longer dimension of the sample (i.e. the 8 mm dimension) corresponds to the sample direction for which expansion was being tested. The sample was mounted on the apparatus and the sample was subjected in the machine direction (MD) or in the transverse direction (TD) to a load of 1 $N/mm^2$ and a temperature increase rate of 10°C/min from 32°C to 220°C. The thermal expansion in air at a temperature of 200°C was measured. The thermal expansion in air at 200°C is defined as the % change of dimension of the film in the given direction (i.e. in the MD or TD), and calculated as $(L_1-L_0)/L_0 \times 100$, where $L_0$ is the dimension at 32°C and $L_1$ is the dimension at 200°C. As the skilled person will appreciate, a negative thermal expansion indicates thermal shrinkage.

(viii) ***Sheet resistance (of the preferred current collector)***

The sheet resistance of the conductive layer of the preferred current collector was measured using a linear four point probe (Jandel Model RM2) according to ASTM F390-98 (2003).

(ix) ***Breakdown current and temperature at breakdown (of the preferred current collector)***

A current collector sample having dimensions 50 mm × 10 mm was held at each end between a pair of conducting clamps. The sample was clamped such that 10 $mm^2$ at each end of the sample was held within the clamps. A current was passed through the samples at a ramp rate of 2 A/min until breakdown was observed. The temperature profile of the sample was monitored using a thermal imaging camera throughout the test, in order to determine the temperature at breakdown.

(x) ***Adhesion strength (of the preferred current collector)***

The adhesion strength of the metallised polymeric substrate to an EAA (ethylene acrylic acid film) having a thickness of 25 μm (available commercially as Vistafix(TP) from UCB Sidac Division) was assessed as follows. A sample of the current collector and a sample of the EAA film were positioned together such that the outer surface of the metallised polymeric substrate layer was contacted with the surface of the EAA film. The samples were heat-sealed using a Sentinel Model 12 (Packaging Industries Group Inc) machine under the following conditions: 105°C (top jaw) and 25°C (lower jaw) for 10 seconds under a pressure of 50 psi. The sealed sample was cut into 25 mm wide strips and the adhesion strength was determined using an Instron Model 4464. The jaws were set 50 mm apart. The upper jaw held the EAA piece of the sealed sample and travelled up at a speed of 300 mm/min, while the lower jaw held the current collector piece of the sealed sample and was stationary. The average peel force was measured and reported as a mean value of 5 results. The plane of adhesion failure was also noted. When the adhesion strength between the metal layer and the polymeric substrate layer is lower than the adhesion strength (about 800 g/25mm) between the metal layer and the EEA film, the test sample delaminates along the interface of the metal layer and polymeric substrate layer. In this case, the average peel force represents the adhesion strength between the metal layer and the polymeric substrate layer. When the adhesion strength between the metal layer and the polymeric substrate layer is higher than the adhesion strength (800 g/25mm) between the metal layer and the EEA film, the test sample delaminates along the interface of the metal layer and EEA film. A further plane of failure is coherent failure within the metallised layer itself, which also indicates that the adhesion strength between the metal layer and the polymeric substrate layer is greater than the force required to achieve coherent failure (typically the adhesion strength between the metal layer and the polymeric substrate layer is therefore greater than about 800 g/25mm).

(xi) ***Mechanical Properties***

The Ultimate Tensile Strength (UTS), Elongation To Break (ETB) and the F5 value (stress at 5% elongation) are measured according to test method ASTM D882. Using a straight edge and a calibrated sample cutter (10mm+\-0.5mm) five strips (100mm in length) of the film are cut along the machine direction. Each sample is tested using an Instron test machine, using pneumatic action grips with rubber jaw faces. The tests are conducted at ambient conditions. The crosshead speed (rate of separation) is 25 mm.min$^{-1}$. The strain rate is 50%. Elongation to Break ($\epsilon_B$ (%)) is defined as:

$$\epsilon_B\ (\%) = (\text{extension at break} / L_0) \times 100$$

where $L_0$ is the original length of the sample between grips.

The brittleness of the film is measured primarily in terms of its ETB value, with a relatively higher ETB value signifying a relatively lower brittleness. As the skilled person would appreciate, a relatively higher ETB value also indicates that the film separators exhibit a relatively higher in-plane flexibility (i.e. flexibility in the plane of the film), and hence improved resistance to the potential dimensional changes of the anode and cathode described hereinabove.

(xii) ***Flex-Cracking***
Flex-cracking can be assessed qualitatively by the repeated bending (through a given angle and about a fulcrum point) of the film, and assessing by eye whether any cracks have developed in the film. A relatively lower degree of flex-cracking signifies that a film has the higher out-of-plane flexibility (i.e. bendability) required for the conditions that the film would be exposed to during cell winding and assembly of batteries.

The present invention is further illustrated with reference to the following non-limiting examples.

EXAMPLES

In the following discussion, reference to "LICGC" is to a lithium-ion conducting glass ceramic powder available commercially from Ohara under the tradename LICGC™ PW-01, and reference to "PEG3350" is to a polyethylene glycol having a number average molecular weight ($M_N$) of 3350.

***Experiment 1***

A copolyester (P1) was made using ethylene glycol, terephthalic acid and polyethylene glycol (PEG3350). PEG3350 was present at a level of 16.4 wt% of the copolyester.

The copolyesters were made by reacting 5551 g terephthalic acid, 2664 g ethylene glycol and 2006 g PEG3350 under pressure (about 40 psi) at high temperature (about 255 °C), along with the addition of an antioxidant (Irganox® 1010, 7 g). A trace of sodium hydroxide (0.35 g) was added to prevent the formation of unwanted by-products, and the esterification reaction proceeded without the need of a catalyst. Water was distilled off from the reaction and the reaction stopped once 90% of the theoretical weight of water from the reaction had been collected. An antifoam agent (Xiameter™DC 1510-US, 0.35 g) was then added to minimise material carryover. Polycondensation was then effected with a titanium-based catalyst system (Tyzor® TnBT, 2 g and Tyzor® AC422, 7.1 g) at about 275°C, and wherein the pressure above the melt was reduced to less than 1 mm Hg. As the polycondensation reaction proceeded, the viscosity of the batch increased, and once an appropriate viscosity (suitably from about 50 to about 100 Pa.S) had been achieved the polymerisation reaction was stopped by restoring the pressure in the vessel back to atmosphere. The copolyester was then extruded as a lace and cast into a water bath, dried and pelletized.

A series of copolyester films based on copolyester P1 was made and comprising various additives, as shown in Table 1, which also shows the thickness, ionic conductivity, internal resistance ($R_1$) and bulk resistance ($R_2$) of the final film.

A film was prepared by melt-extruding and casting copolyester P1 to form a cast copolyester film, which was subsequently biaxially drawn using a simultaneous forward and sideways draw ratio of 3.5.

Comparative Example 3 and Example 1 were made by solvent casting techniques after dissolution/dispersion of the film of Comparative Example 2 in N-methyl-2-pyrrolidone (NMP). Specifically, the components shown in Table 1 were dispersed and thoroughly mixed in 5mL NMP in an autoclave at 160°C for 24 hours. The resultant copolyester composition was then cast on the surface of an aluminium disc (i.e. the electrode in the test cell) and dried by heating at 60°C for 24 hours. The dried copolyester was then subjected to vacuum drying at 60°C for 24 hours to provide the

copolyester films.

A further comparative film (Comparative Example 1) comprising LICGC was obtained from Ohara under the tradename LICGC™ AG-01.

**Table 1**

| Example | Components | Film thickness (μm) | Ionic conductivity (S/cm) | R1 (Ω) | R2 (Ω) |
|---|---|---|---|---|---|
| Comparative Example 1 | LICGC | 220 | $4.4 \times 10^{-5}$ | 10 | 1400 |
| Comparative Example 2 | P1 | 70 | $< 1 \times 10^{-9}$ | - | - |
| Comparative Example 3 | P1 (0.3 g) $LiCF_3SO_3$ (0.2g) | 23 | $0.1 \times 10^{-5}$ | 18 | 1112 |
| Example 1 | P1 (0.4g) $LiCF_3SO_3$ (0.1g) LICGC (0.3g) | 32 | $0.9 \times 10^{-5}$ | 5 | 171 |

A comparison of Example 1 with Comparative Examples 2 and 3 demonstrates that the addition of the ceramic particle material significantly improves the ionic conductivity of the polyester films. Indeed, the film of Example 1 provides an ionic conductivity which is comparable to the ceramic separator of Comparative Example 1, with the advantage of being significantly thinner. Furthermore, the film of Example 1 demonstrated advantageous flexibility compared to Comparative Example 1 which was very brittle and thereby difficult to manufacture and subject to fracture in use. Thus, the film of Example 1 exhibited an advantageous combination of ionic conductivity, flexibility and low thickness for use as a separator in a solid state battery, whilst retaining ease of manufacture.

***Experiment 2***

The copolyester was made using bis(2-hydroxyethyl) isophthalate (BHEI) and polyethylene glycol (PEG 3350). PEG 3350 was present at a level of 50 wt% of the copolyester. The copolyesters were made by reacting 49.82 g BHEI, and 50.18 kg PEG 3350 along with the addition of an antioxidant (Irganox® 1010, 2.95 g). Polycondensation was effected with an antimony trioxide catalyst (0.20 g) at about 280-290 °C, and wherein the pressure above the melt was reduced to less than 5 mm Hg. As the polycondensation reaction proceeded, the viscosity of the batch increased, and once a pre-determined viscosity had been achieved the polymerisation reaction was stopped by restoring the pressure in the vessel back to atmosphere. The copolyester was then extruded as a lace, cast into a water bath and dried.

Copolyester P2 was then used to prepare a series of solvent-cast copolyester films (Comparative Examples 4 and 5 and Example 2) containing various additives, as shown in Table 2. The copolyester was dissolved in NMP and the other components shown in Table 2 were introduced, dispersed and thoroughly mixed in NMP in a beaker at 25°C for 12 hours. Comparative Example 4 used 10 mL NMP, Comparative Example 5 used 0.5 mL NMP whereas Example 2 used 5 mL NMP. Films were made by solvent-casting the resultant copolyester compositions on an aluminium surface and dried by heating at 60°C for 24 hours, and then vacuum-dried at 60°C for a further 24 hours to provide the copolyester film. Table 2 shows the thickness, ionic conductivity, internal resistance ($R_1$) and bulk resistance ($R_2$) of the final film.

**Table 2**

| Example | Components | Film thickness (μm) | Ionic conductivity (S/cm) | R1 (Ω) | R2 (Ω) |
|---|---|---|---|---|---|
| Comparative Example 1 | LICGC | 220 | $4.4 \times 10^{-5}$ | 10 | 1400 |
| Comparative Example 4 | P2 (0.5g) | 10 | $< 1 \times 10^{-9}$ | - | - |
| Comparative Example 5 | P2 (0.8 g) $LiCF_3SO_3$ (0.2g) | 73 | $0.3 \times 10^{-5}$ | 22 | 1320 |

(continued)

| Example | Components | Film thickness (μm) | Ionic conductivity (S/cm) | R1 (Ω) | R2 (Ω) |
|---|---|---|---|---|---|
| Example 2 | P2 (0.4g)<br>$LiCF_3SO_3$ (0.1g)<br>LICGC (0.5g) | 82 | $0.5 \times 10^{-5}$ | 45 | 930 |

A comparison of Example 2 with Comparative Examples 4 and 5 demonstrates that the addition of the ceramic particulate material significantly improves the ionic conductivity of the polyester films. The separator of Example 2 provides an ionic conductivity which approaches that of the ceramic separator of Comparative Example 1, with the advantages of being significantly thinner and showing advantageous mechanical properties, in particular flexibility without brittleness.

***Experiment 3***

The ionic conductivity of the films of Comparative Examples 3 and 5, and Examples 1 and 2 was also measured at 40° C and 60°C, and the results are shown in Table 3, along with the ionic conductivity at 25°C.

**Table 3**

| Example | Ionic conductivity (S/cm) at 25°C | Ionic conductivity (S/cm) at 40°C | Ionic conductivity (S/cm) at 60°C |
|---|---|---|---|
| Comparative Example 3 | $1.09 \times 10^{-6}$ | $7.87 \times 10^{-6}$ | $1.84 \times 10^{-5}$ |
| Example 1 | $8.15 \times 10^{-6}$ | $2.98 \times 10^{-5}$ | $4.11 \times 10^{-5}$ |
| Comparative Example 5 | $2.32 \times 10^{-6}$ | $1.04 \times 10^{-5}$ | $2.01 \times 10^{-5}$ |
| Example 2 | $5.00 \times 10^{-6}$ | $2.19 \times 10^{-5}$ | $3.07 \times 10^{-5}$ |

The results in Table 3 demonstrate that the addition of the ceramic particle material significantly improves the ionic conductivity of the polyester films at all temperatures tested, and to commercially useful levels of ionic conductivity. Furthermore, the results in Table 3 demonstrate that ionic conductivity can be reliably increased even at elevated temperatures.

## Claims

1. A copolyester film comprising a copolyester which comprises repeating units derived from a diol, a dicarboxylic acid and a poly(alkylene oxide), wherein the copolyester film further comprises a first metal ion-containing component selected from conductive ceramic particulate materials, wherein said first metal ion-containing component is a lithium ion-containing component or a sodium ion-containing component, wherein the film may further comprise additional metal ions from one or more sources other than said conductive ceramic particulate material, and wherein, when present, the metal of said additional metal ions is the same as the metal of said first metal ion-containing component.

2. A film according to claim 1, wherein the film has a thickness of no more than 200 μm, preferably no more than 150 μm, preferably no more than 100 μm, preferably no more than 85 μm, preferably no more than 70 μm, preferably no more than 50 μm, and preferably no more than 35 μm;
and/or wherein the film has a thickness of from 5 μm, preferably from 10 μm, preferably from 15 μm, and preferably from 20 μm.

3. A film according to any preceding claim, wherein:

   (i) said copolyester comprises semi-crystalline segments derived from an dicarboxylic acid and an aliphatic diol, and amorphous segments derived from poly(alkylene oxide); and/or

(ii) the poly(alkylene oxide) constitutes from 0.1 to 80 wt%, preferably from about 5 to about 78 wt%, preferably from about 10 to about 75 wt%, preferably from about 12 to about 65 wt%, preferably from about 15 to about 60 wt%, preferably from about 16 to about 55 wt% by total weight of the copolyester; and/or
(iii) the diol is selected from $C_2$, $C_3$ or $C_4$ aliphatic diols, preferably wherein the aliphatic diol is ethylene glycol; and/or
(iv) the dicarboxylic acid is an aromatic dicarboxylic acid selected from isophthalic acid, naphthalene dicarboxylic acid and terephthalic acid; and/or
(v) the poly(alkylene oxide)glycol is selected from $C_2$ to $C_{15}$, preferably $C_2$ to $C_{10}$, preferably $C_2$ to $C_6$ alkylene chains, preferably polyethylene glycol (PEG), polypropylene glycol (PPG) and poly(tetramethylene oxide) glycol (PTMO), preferably from PEG and PPG, preferably wherein the poly(alkylene oxide) is PEG; and/or
(vi) the number average molecular weight of the poly(alkylene oxide) is from about 200 to about 20000 g/mol, preferably from about 400 to about 3500 g/mol, preferably from about 500 to about 3500 g/mol.

**4.** A film according to any preceding claim wherein the film comprises said first metal ion-containing component and said additional metal ions;
optionally wherein said additional metal ions are in the form of a second metal ion component, preferably selected from metal salts.

**5.** A film according to any preceding claim, wherein said metal is lithium;

optionally wherein the lithium ion-containing conductive ceramic particulate material is selected from NASICON-type ceramic particulate materials such as lithium ion-containing conductive glass ceramic particulate materials; LISICON-type ceramic particulate materials; perovskite-type oxide ceramic particulate materials; garnet-type oxide ceramic particulate materials; lithium phosphorus oxynitride (LIPON)-type ceramic particulate materials; and lithium aluminium silicate (LAS) ceramic particulate materials;
further optionally wherein the lithium ion-containing conductive ceramic particulate material is selected from:

NASICON-type materials having the general formula $LiM_y(PO_4)_3$, where M denotes a multivalent metal ion such as one or more of Al, Si, Ti, Zr, Ge, Sn and Hf;
NASICON-type materials having the general formula $Li_{1+x}M_xTi_{2-x}(PO_4)_3$ (LATP) where M denotes a trivalent cation selected from one or more of Al, Sc, Y and La;
NASICON-type materials having the general formula $Li_{1+x}Al_xGe_{2-x}(PO_4)_3$ (LAGP);
materials having a crystalline phase of $Li_{1+x+y}Al_xTi_{2-x}Si_yP_{3-y}O_{12}$ and a composition of $Li_2O$-$Al_2O_3$-$SiO_2$-$P_2O_5$-$TiO_2$;
materials having a main crystalline phase of $Li_{1+x+y}Al_x(Ti,Ge)_{2-x}Si_yP_{3-y}O_{12}$ and a composition of $Li_2O$-$Al_2O_3$-$SiO_2$-$P_2O_5$-$TiO_2$-$GeO_2$;
LISICON-type materials having the general formula $Li_{2+2x}Zn_{1-x}GeO_4$, optionally wherein other elements (typically isovalent elements) may replace the Li, Zn and/or Ge, such as $Li_{2+2x}Zn_{1-x}Ge_4O_{16}$, $Li_{14}ZnGe_4O_{16}$, $Li_{(3+x)}Ge_xV_{(1-x)}O_4$, $Li_{(4-x)}Si_{(1-x)}P_xO_4$;
thio-LISICON-type materials such as $Li_{(4-x)}Ge_{(1-x)}P_xS_4Li_{10}GeP_2S_{12}$;
perovskite-type oxide materials such as $Li_{3x}La_{(2/3)-x}TiO_3$ (LLTO) and $Li_{3x}La_{1/3-x}TaO_3$;
garnet-type oxide materials having the general formula $Li_{7-3y-x}La_3Zr_{2-x}M1_yM2_xO_{12}$ (where M1 denotes a trivalent cation such as Al and Ga, M2 denotes a pentavalent cation such as Nb and Ta, $x \geq 0$ and $y \leq 2$) such as $Li_5La_3M_2O_{12}$ (where M denotes Nb and/or Ta),
$Li_6ALa_2M_2O_{12}$ (where A denotes Ca, Sr and/or Ba, and M denotes Nb or Ta) or $L_{16.5}La_{2.5}Ba_{0.5}ZrTaO_{12;}$
LIPON-type materials having the general formula $Li_xPO_yN_z$, such as$Li_2PO_2N$; and
LAS-type materials such as $AlLiO_6Si_2$.

**6.** A film according to any of claims 1 to 4, wherein said metal is sodium and the sodium ion-containing conductive ceramic particulate material is selected from NASICON-type materials such as conductive glass ceramic particulate materials, beta-alumina and beta''-alumina phases $Na_2O.nAl_2O_3$ where $5 \leq n \leq 11$, sodium rare earth silicates, and sodium-ion conducting oxyhalide glasses; and preferably from NASICON-structured oxides having the general formula $Na_3Zr_2Si_2PO_{12}$, $NaTi_2(PO_4)_3$, $NaGe_2(PO_4)_3$ or $Na_{1+x}[Sn_xGe_{2-x}(PO_4)_3]$, sodium rare earth silicates having the general formula $Na_5MSi_4O_{12}$, where M is Y, Sc, Lu and/or any trivalent rare earth cation, and sodium-ion conducting oxyhalide glass such as NaI-NaCl-$Na_2O$-$B_2O_3$.

**7.** A film according to any preceding claim wherein the amount of said metal-ion containing conductive ceramic particulate material present in the copolyester film is in the range of from 0.1 wt% to 60 wt%, preferably from 5 wt% to

50 wt%, preferably from 8 wt% to 35 wt%, preferably from 10 to 20 wt% by total weight of the copolyester film.

**8.** A film according to any preceding claim wherein said additional metal ions are in the form of a metal salt selected from salts of:

(i) aromatic carboxylic acids, preferably aromatic dicarboxylic acids, preferably terephthalic acid or isophthalic acid;
(ii) aliphatic carboxylic acids, including aliphatic dicarboxylic acids, preferably acetic acid, glycolic acid or succinic acid;
(iii) carbonic acids;
(iv) phenolic acids, preferably salicylic acid;
(v) mineral acids, such as perchloric acid or phosphoric acid, particularly phosphoric acid; and
(vi) boric acids, preferably bis(oxalate)boric acid.

**9.** A film according to any preceding claim wherein said additional metal ions are in the form of a metal salt of an organic acid, and which is preferably the salt of the aromatic dicarboxylic acid from which the copolyester is derived.

**10.** A film according to claim 8 or 9 wherein said additional metal ions are in the form of a metal salt selected from the alkoxylate esters of said acids, preferably the carboxylic acids, preferably the dicarboxylic acids, preferably the aromatic dicarboxylic acids, preferably terephthalic acid, and wherein said alkoxylate esters are preferably derived from the aliphatic diols, preferably from $C_{2-10}$ aliphatic diols, preferably from $C_{2-6}$ aliphatic diols, preferably from $C_2$, $C_3$ or $C_4$ aliphatic diols, more preferably from ethylene glycol, 1,3-propanediol and 1,4-butanediol, more preferably from ethylene glycol.

**11.** A film according to any preceding claim wherein said additional metal ions are lithium ions and in the form of lithium salts selected from bis(trifluoromethanesulfonyl)imide (LiTFSI), lithium hexafluorophosphate ($LiPF_6$), lithium tetrafluoroborate ($LiBF_4$), lithium thiocyanate (LiSCN), lithium hexafluoroarsenate ($LiAsF_6$), lithium trifluoromethanesulfonate ($LiCF_3SO_3$), lithium bromide (LiBr), lithium iodide (LiI), lithium bis(trifluoromethanesulfonimide) ($LiN(CF_3SO_2)_2$), lithium tris(trifluoromethylsulfonyl)methide ($LiC(CF_3SO_2)_3$), lithium orthosilicate, lithium trifluoroacetate ($LiCF_3CO_2$), lithium bis(fluorosulfite)amide ($LiN(FO_2S)_2$), dilithium terephthalate (DLTA), dilithium isophthalate, lithium glycolate, lithium benzoate, lithium acetate, lithium carbonate, lithium perchlorate, lithium orthosilicate, lithium phosphate, lithium salicylate, lithium succinate, lithium bis(oxalato)borate and dilithium bis hydroxy ethyl terephthalate (DL-BHET);
optionally wherein said additional metal ions are lithium ions and in the form of lithium salts selected from dilithium terephthalate (DLTA), dilithium isophthalate, dilithium bis hydroxy ethyl terephthalate (DL-BHET) and $LiCF_3SO_3$.

**12.** A film according to any of claims 1 to 9 wherein said additional metal ions are sodium ions and in the form of sodium salts selected from sodium nitrate ($NaNO_3$), sodium perchlorate ($NaClO_4$), sodium tetrafluoroborate ($NaBF_4$), sodium hexafluorophosphate ($NaPF_6$), sodium bis(trifluoromethanesulfonyl)imide (NaTFSI), sodium bis(trifluoromethane)sulfonimide ($Na[N(CF_3SO_2)_2]$), sodium hexafluoroarsenate(V) ($NaAsF_6$), sodium bis(oxalatoborate) ("NaBOB"), sodium halides (NaX), where X=Cl, Br or I, sodium thiocyanate (NaSCN), sodium pentacyanopropenide (NaPCPI), sodium tetracyanopirolate (NaTCP) and sodium tricyanoimidazolate (NaTIM).

**13.** A film according to any of claims 1 to 12 wherein:

(i) said additional metal ions are present in and held within the polymeric matrix of the film by the interaction between the metal cations and negatively charged oxygen atoms of the copolyester, preferably at least the oxygen atoms of the polyalkylene oxide units; or
(ii) said additional metal ions are in the form of a metal salt and held within the polymeric matrix of the film by virtue of the interaction between the metal cations and the anion of said metal salt which is not covalently bound to the copolyester.

**14.** A film according to any preceding claim wherein:

(i) the amount of said additional metal ions in the film is effective to provide a metal:O molar ratio of from 5:1 to 1:50, preferably from about 4:1 to about 1:50, preferably from about 3:1 to about 1:50, preferably from about 2:1 to about 1:50, preferably about 1:1 to about 1:40, preferably about 1:2 to about 1:30, preferably about 1:4 to about 1:25, wherein the number of O atoms in this ratio is defined as the number of O atoms in the poly(alkylene

oxide) residues, and the number of metal atoms in this ratio is defined as the number of metal atoms provided by said additional metal ions; and/or said additional metal ions are in the form of a second metal ion component (preferably metal salts) which is present in an amount of from 0.1 wt% to 40 wt%, preferably from 1 wt% to 10 wt% by total weight of the copolyester film; and/or
(ii) the copolyester, first metal ion-containing component and, where present, a second metal ion component comprising said additional metal ions, are the major component of the film and preferably make up at least about 85%, preferably at least about 95%, and preferably at least about 98% by weight of the total weight of the copolyester film; and/or
(iii) the film further comprises an antioxidant; and/or
(iv) the film further comprises an inorganic particulate filler selected from metalloid oxides such as alumina, titania, zirconia, zinc oxide, talc and silica; calcined china clay; alkaline metal salts such as the carbonates and sulphates of calcium and barium; and non-conductive ceramic particulate materials, wherein said inorganic particulate filler is a different entity from the first and second metal ion-containing components and does not contain the metal ion of the first or second metal ion-containing components, preferably wherein the inorganic particulate filler is present in amounts of from 5 wt% to 20 wt%, by total weight of the copolyester film; and/or
(v) the film exhibits a conductivity of at least about $10^{-7}$ S/cm, preferably of at least about $10^{-6}$ S/cm measured at 25°C, and/or a conductivity of at least about $10^{-6}$ S/cm, preferably at least about $10^{-5}$ S/cm measured at 60°C; and/or
(vi) the film is a self-supporting, biaxially oriented film.

**15.** A method of manufacturing a polyester film as described in any of claims 1 to 14, wherein said method comprises the comprises the steps of:

(i) reacting said diol with said dicarboxylic acid or an ester thereof (suitably a lower alkyl ($C_{1-4}$) ester, preferably the dimethyl ester), to form a bis(hydroxyalkyl)-ester of said dicarboxylic acid;
(ii) polymerising in a polycondensation reaction said bis(hydroxyalkyl)-ester of said dicarboxylic acid in the presence of an poly(alkylene oxide) to form a copolyester;
(iii) introducing said first metal ion-containing component selected from conductive ceramic particulate materials, and optionally said additional metal ions from one or more sources other than said conductive ceramic particulate materials, during synthesis of the copolyester in steps (i) and/or (ii), and/or during a subsequent separate compounding or mixing step, to form a copolyester composition; and
(iv) forming a copolyester film from said copolyester composition, preferably by melt-extruding said composition or by solvent-casting a dispersion or solution comprising said copolyester composition.

**16.** A method of manufacturing a polyester film according to claim 15, wherein the reaction product of step (ii) is subjected to solid state polymerisation; and/or
wherein said film is cast on a supporting base which is itself a component of a solid state battery, preferably an electrode.

**17.** A film obtained by a method according to any one of claims 15 or 16.

**18.** A metal-ion battery comprising an anode, a cathode and a separator between the anode and the cathode, wherein said separator is the film defined in any of claims 1 to 14 or 17.

**19.** A metal-ion battery according to claim 18 wherein:

(i) the metal-ion battery is a solid-state battery; and/or
(ii) the metal of said metal-ion battery is selected from lithium; and/or
(iii) the anode is selected from graphite and lithium titanate (LTO) anodes, and/or wherein the cathode is made from lithium or mixed oxides of lithium and other metal(s), particularly lithium titanate, lithium iron phosphate ($LiFePO_4$) and/or lithium-nickel-manganese-cobalt oxide ($LiNiMnCoO_2$); and/or
(iv) the metal-ion battery further comprises an anode current collector disposed on a surface of the anode and a cathode current collector disposed on the surface of the cathode, such that the layer order is anode current collector / anode / separator / cathode / cathode current collector; and/or
(v) said anode current collector and/or said cathode current collector are independently selected from current collectors comprising a biaxially oriented polyester substrate layer and a first metal layer on a side of the polyester substrate layer, wherein the polyester substrate layer exhibits positive thermal expansion in air at 200°C in each of the transverse direction (TD) and machine direction (MD), wherein the polyester substrate layer has a thickness

of no more than 12 μm, and wherein the first metal layer has a thickness of from 50 to 1000 nm, and preferably wherein the current collector further comprises a second metal layer having a thickness of from 50 to 1000 nm wherein the first metal layer and the second metal layer are on opposing sides of the polyester substrate layer, preferably wherein the first metal layer and, where present, the second metal layer each independently comprise at least one of aluminium, copper, nickel, titanium, silver, nickel-copper alloy, or aluminium-zirconium alloy, and preferably wherein the first and second metal layers are selected from the same material, and preferably wherein the first and second metal layers are both either aluminium or copper.

**20.** Use of a film as defined in any of claims 1 to 14 or 17 as a separator in a metal-ion battery, preferably wherein said battery is as defined in claims 18 or 19.

**21.** A method of manufacturing a metal-ion battery as defined in claims 18 or 19 comprising a copolyester film defined in any of claims 1 to 14 or 17, the method comprising the steps of:

(a) providing the copolyester film defined in any of claims 1 to 14 or 17;
(b) assembling the metal-ion battery, wherein the battery comprises an anode, a cathode and a separator between the anode and the cathode, wherein said separator is the copolyester film obtained from step (a).

**Patentansprüche**

**1.** Copolyesterfolie umfassend einen Copolyester, der Wiederholungseinheiten abgeleitet von einem Diol, einer Dicarbonsäure und einem Poly(alkylenoxid) enthält, wobei die Copolyesterfolie ferner eine erste Metallionen-enthaltende Komponente ausgewählt aus leitfähigen keramischen Partikelmaterialien umfasst, wobei die erste Metallionen-enthaltende Komponente eine Lithiumionen-enthaltende Komponente oder eine Natriumionen-enthaltende Komponente ist, wobei die Folie ferner zusätzliche Metallionen aus einer oder mehreren von dem leitfähigen keramischen Partikelmaterial verschiedenen Quellen umfassen kann und wobei, falls vorhanden, das Metall der zusätzlichen Metallionen das gleiche ist wie das Metall der ersten Metallionen-enthaltenden Komponente.

**2.** Folie nach Anspruch 1, wobei die Folie eine Dicke von nicht mehr als 200 um, vorzugsweise nicht mehr als 150 um, vorzugsweise nicht mehr als 100 um, vorzugsweise nicht mehr als 85 um, vorzugsweise nicht mehr als 70 um, vorzugsweise nicht mehr als 50 μm und vorzugsweise nicht mehr als 35 μm aufweist;
und/oder wobei die Folie eine Dicke von 5 um, vorzugsweise von 10 um, vorzugsweise von 15 μm und vorzugsweise von 20 μm aufweist.

**3.** Folie nach einem der vorstehenden Ansprüche, wobei:

(i) der Copolyester halbkristalline Segmente, die von einer Dicarbonsäure und einem aliphatischen Diol abgeleitet sind, und amorphe Segmente, die von Poly(alkylenoxid) abgeleitet sind, umfasst, und/oder
(ii) das Poly(alkylenoxid) von 0,1 bis 80 Gew.-%, vorzugsweise von etwa 5 bis etwa 78 Gew.-%, vorzugsweise von etwa 10 bis etwa 75 Gew.-%, vorzugsweise von etwa 12 bis etwa 65 Gew.-%, vorzugsweise von etwa 15 bis etwa 60 Gew.-%, vorzugsweise von etwa 16 bis etwa 55 Gew.-% bezogen auf das Gesamtgewicht des Copolyesters darstellt; und/oder
(iii) das Diol ausgewählt ist aus $C_2$-, $C_3$- oder $C_4$-aliphatischen Diolen, wobei das aliphatische Diol Ethylenglycol ist; und/oder
(iv) die Dicarbonsäure eine aromatische Dicarbonsäure ausgewählt aus Isophthalsäure, Naphthalindicarbonsäure und Terephthalsäure ist; und/oder
(v) das Poly(alkylenoxid)glycol ausgewählt ist aus $C_2$- bis $C_{15}$-, vorzugsweise $C_2$- bis $C_{10}$-, vorzugsweise $C_2$- bis $C_6$-Alkylenketten, vorzugsweise Polyethylenglycol (PEG), Polypropylenglycol (PPG) und Poly(tetramethylenoxid)glycol (PTMO), vorzugsweise aus PEG und PPG, vorzugsweise wobei das Poly(alkylenoxid) PEG ist; und/oder
(vi) das anzahlgemittelte Molekulargewicht des Poly(alkylenoxids) von etwa 200 bis etwa 20000 g/mol, vorzugsweise von etwa 400 bis etwa 3500 g/mol, vorzugsweise von etwa 500 bis etwa 3500 g/mol beträgt.

**4.** Folie nach einem der vorstehenden Ansprüche, wobei die Folie die erste Metallionen-enthaltende Komponente und die zusätzlichen Metallionen umfasst; gegebenenfalls wobei die zusätzlichen Metallionen in der Form einer zweiten Metallionenkomponente, vorzugsweise ausgewählt aus Metallsalzen, vorliegen.

**5.** Folie nach einem der vorstehenden Ansprüche, wobei das Metall Lithium ist;

gegebenenfalls wobei das Lithiumionen-enthaltende leitfähige keramische Partikelmaterial ausgewählt ist aus keramischen Partikelmaterialien vom NASICON-Typ, wie z.B. Lithiumionen-enthaltenden leitfähigen Glaskeramik-Partikelmaterialien; keramischen Partikelmaterialien vom LISICON-Typ; Oxidkeramik-Partikelmaterialien vom Perovskit-Typ; Oxidkeramik-Partikelmaterialien vom Granat-Typ; keramischen Partikelmaterialien vom Lithium-Phosphor-Oxynitrid(LIPON)-Typ; und keramischen Partikelmaterialien vom Lithium-Aluminiumsilicat(LAS)-Typ;
ferner gegebenenfalls wobei das Lithiumionen-enthaltende leitfähige keramische Partikelmaterial ausgewählt ist aus:

Materialien vom NASICON-Typ mit der allgemeinen Formel $LiM_y(PO_4)_3$, wobei M ein mehrwertiges Metallion, wie z.B. eines oder mehrere von Al, Si, Ti, Zr, Ge, Sn und Hf, bezeichnet;
Materialien vom NASICON-Typ mit der allgemeinen Formel $Li_{1+x}M_xTi_{2-x}(PO_4)_3$ (LATP), wobei M ein dreiwertiges Kation ausgewählt aus einem oder mehreren von Al, Sc, Y und La bezeichnet;
Materialien vom NASICON-Typ mit der allgemeinen Formel $Li_{1+x}Al_xGe_{2-x}(PO_4)_3$ (LAGP);
Materialien mit einer kristallinen Phase von $Li_{1+x+y}Al_xTi_{2-x}Si_yP_{3-y}O_{12}$ und einer Zusammensetzung von $Li_2O$-$Al_2O_3$-$SiO_2$-$P_2O_5$-$TiO_2$ ;
Materialien mit einer kristallinen Hauptphase von $Li_{1+x+y}Al_x(Ti,Ge)_{2-x}Si_yP_{3-y}O_{12}$ und einer Zusammensetzung von $Li_2O$-$Al_2O_3$-$SiO_2$-$P_2O_5$-$TiO_2$-$GeO_2$;
Materialien vom LISICON-Typ mit der allgemeinen Formel $Li_{2+2x}Zn_{1-x}GeO_4$, wobei gegebenenfalls andere Elemente (gewöhnlich isovalente Elemente) das Li, Zn und/oder Ge ersetzen können, wie z.B. $Li_{2+2x}Zn_{1-x}Ge_4O_{16}$, $Li_{14}ZnGe_4O_{16}$, $Li_{(3+x)}Ge_xV_{(1-x)}O_4$, $Li_{(4-x)}Si_{(1-x)}P_xO_4$;
Materialien vom Thio-LISICON-Typ, wie z.B. $Li_{(4-x)}Ge_{(1-x)}P_xS_4Li_{10}GeP_2S_{12}$;
Oxidmaterialien vom Perovskit-Typ, wie z.B. $Li_{3x}La_{(2/3)-x}TiO_3$ (LLTO) und $Li_{3x}La_{1/3-x}TaO_3$;
Oxidmaterialien vom Granat-Typ mit der allgemeinen Formel $Li_{7-3y-x}La_3Zr_{2-x}M1_yM2_xO_{12}$ (wobei M1 ein dreiwertiges Kation, wie z.B. Al und Ga, bezeichnet, M2 ein fünfwertiges Kation, wie z.B. Nb und Ta, bezeichnet, $x \geq 0$ und $y \leq 2$), wie z.B. $Li_5La_3M_2O_{12}$ (wobei M Nb und/oder Ta bezeichnet), $Li_6ALa_2M_2O_{12}$ (wobei A Ca, Sr und/oder Ba bezeichnet und M Nb oder Ta bezeichnet) oder $Li_{6,5}La_{2,5}Ba_{0,5}ZrTaO_{12}$;
Materialien vom LIPON-Typ mit der allgemeinen Formel $Li_xPO_yN_z$, wie z.B. $Li_2PO_2N$; und
Materialien vom LAS-Typ, wie z.B. $AlLiO_6Si_2$.

**6.** Folie nach einem der Ansprüche 1 bis 4, wobei das Metall Natrium ist und das Natriumionen-enthaltende leitfähige keramische Partikelmaterial ausgewählt ist aus Materialien vom NASICON-Typ, wie z.B. leitfähigen Glaskeramik-Partikelmaterialien, beta-Aluminiumoxid- und beta"-Aluminiumoxidphasen $Na_2O.nAl_2O_3$, wobei $5 \leq n \leq 11$, Natrium-Seltenerdsilicaten und Natriumionen-leitenden Oxyhalogenidgläsern; und vorzugsweise aus NASICONstrukturierten Oxiden mit der allgemeinen Formel $Na_3Zr_2Si_2PO_{12}$, $NaTi_2(PO_4)_3$, $NaGe_2(PO_4)_3$ oder $Na_{1+x}[Sn_xGe_{2-x}(PO_4)_3]$, Natrium-Seltenerdsilicaten mit der allgemeinen Formel $Na_5MSi_4O_{12}$, wobei M Y, Sc, Lu und/oder ein beliebiges dreiwertiges Seltenerdkation ist, und Natriumionen-leitendem Oxyhalogenidglas, wie z.B. NaI-NaCl-$Na_2O$-$B_2O_3$.

**7.** Folie nach einem der vorstehenden Ansprüche, wobei die Menge des in der Copolyesterfolie vorhandenen Metallionen-enthaltenden leitfähigen keramischen Partikelmaterials in dem Bereich von 0,1 Gew.-% bis 60 Gew.-%, vorzugsweise von 5 Gew.-% bis 50 Gew.-%, vorzugsweise von 8 Gew.-% bis 35 Gew.-%, vorzugsweise von 10 bis 20 Gew.-% bezogen auf das Gesamtgewicht der Copolyesterfolie liegt.

**8.** Folie nach einem der vorstehenden Ansprüche, wobei die zusätzlichen Metallionen in der Form eines Metallsalzes vorliegen, ausgewählt aus Salzen von:

(i) aromatischen Carbonsäuren, vorzugsweise aromatischen Dicarbonsäuren, vorzugsweise Terephthalsäure oder Isophthalsäure;
(ii) aliphatischen Carbonsäuren, einschließlich aliphatischer Dicarbonsäuren, vorzugsweise Essigsäure, Glycolsäure oder Bernsteinsäure;
(iii) Kohlensäuren;
(iv) Phenolsäuren, vorzugsweise Salicylsäure;
(v) Mineralsäuren, wie z.B. Perchlorsäure oder Phosphorsäure, insbesondere Phosphorsäure; und
(vi) Borsäuren, vorzugsweise Bis(oxalat)borsäure.

**9.** Folie nach einem der vorstehenden Ansprüche, wobei die zusätzlichen Metallionen in der Form eines Metallsalzes

einer organischen Säure vorliegen, das vorzugsweise das Salz der aromatischen Dicarbonsäure ist, von der der Copolyester abgeleitet ist.

**10.** Folie nach Anspruch 8 oder 9, wobei die zusätzlichen Metallionen in der Form eines Metallsalzes ausgewählt aus den Alkoxylatestern der Säuren, vorzugsweise der Carbonsäuren, vorzugsweise der Dicarbonsäuren, vorzugsweise der aromatischen Dicarbonsäuren, vorzugsweise Terephthalsäure, vorliegen und wobei die Alkoxylatester vorzugsweise von den aliphatischen Diolen, vorzugsweise von $C_{2-10}$-aliphatischen Diolen, vorzugsweise von $C_{2-6}$-aliphatischen Diolen, vorzugsweise von $C_2$-, $C_3$- oder $C_4$-aliphatischen Diolen, bevorzugter von Ethylenglycol, 1,3-Propandiol und 1,4-Butandiol, bevorzugter von Ethylenglycol abgeleitet sind.

**11.** Folie nach einem der vorstehenden Ansprüche, wobei die zusätzlichen Metallionen Lithiumionen sind und in der Form von Lithiumsalzen ausgewählt aus Bis(trifluormethansulfonyl)imid (LiTFSI), Lithiumhexafluorphosphat ($LiPF_6$), Lithiumtetrafluorborat($LiBF_4$), Lithiumthiocyanat (LiSCN), Lithiumhexafluorarsenat ($LiAsF_6$), Lithiumtrifluormethansulfonat ($LiCF_3SO_3$), Lithiumbromid (LiBr), Lithiumiodid (LiI), Lithiumbis(trifluormethansulfonimid) ($LiN(CF_3SO_2)_2$), Lithiumtris(trifluormethylsulfonyl)methid ($LiC(CF_3SO_2)_3$), Lithiumorthosilicat, Lithiumtrifluoracetat ($LiCF_3CO_2$), Lithiumbis(fluorsulfit) amid ($LiN(FO_2S)_2$), Dilithiumterephthalat (DLTA), Dilithiumisophthalat, Lithiumglycolat, Lithiumbenzoat, Lithiumacetat, Lithiumcarbonat, Lithiumperchlorat, Lithiumorthosilicat, Lithiumphosphat, Lithiumsalicylat, Lithiumsuccinat, Lithiumbis(oxalato)borat und Dilithiumbishydroxyethylterephthalat (DL-BHET) vorliegen;
gegebenenfalls wobei die zusätzlichen Metallionen Lithiumionen sind und in der Form von Lithiumsalzen ausgewählt aus Dilithiumterephthalat (DLTA), Dilithiumisophthalat, Dilithiumbishydroxyethylterephthalat (DL-BHET) und $LiCF_3SO_3$vorliegen.

**12.** Folie nach einem der Ansprüche 1 bis 9, wobei die zusätzlichen Metallionen Natriumionen sind und in der Form von Natriumsalzen ausgewählt aus Natriumnitrat ($NaNO_3$), Natriumperchlorat ($NaClO_4$), Natriumtetrafluorborat ($NaBF_4$), Natriumhexafluorphosphat ($NaPF_6$), Natriumbis(trifluormethansulfonyl)imid (NaTFSI), Natriumbis(trifluormethan)sulfonimid ($Na[N(CF_3SO_2)_2]$), Natriumhexafluorarsenat (V) ($NaAsF_6$), Natriumbis(oxalatoborat) ("NaBOB"), Natriumhalogeniden (NaX), wobei X=Cl, Br oder I, Natriumthiocyanat (NaSCN), Natriumpentacyanopropenid (NaPCPI), Natriumtetracyanopirolat (NaTCP) und Natriumtricyanoimidazolat (NaTIM) vorliegen.

**13.** Folie nach einem der Ansprüche 1 bis 12, wobei:

(i) die zusätzlichen Metallionen in der Polymermatrix der Folie vorhanden sind und durch die Wechselwirkung zwischen den Metallkationen und negativ geladenen Sauerstoffatomen des Copolyesters, vorzugsweise wenigstens den Sauerstoffatomen der Polyalkylenoxideinheiten, darin gehalten werden; oder
(ii) die zusätzlichen Metallionen in der Form eines Metallsalzes vorliegen und aufgrund der Wechselwirkung zwischen den Metallkationen und dem Anion des Metallsalzes, das nicht kovalent an den Copolyester gebunden ist, in der Polymermatrix der Folie gehalten werden.

**14.** Folie nach einem der vorstehenden Ansprüche, wobei:

(i) die Menge der zusätzlichen Metallionen in der Folie wirksam ist, um ein Metall: O-Molverhältnis von 5:1 bis 1:50, vorzugsweise von etwa 4:1 bis etwa 1:50, vorzugsweise von etwa 3:1 bis etwa 1:50, vorzugsweise von etwa 2:1 bis etwa 1:50, vorzugsweise etwa 1:1 bis etwa 1:40, vorzugsweise etwa 1:2 bis etwa 1:30 bereitzustellen, wobei die Anzahl von O-Atomen in diesem Verhältnis als die Anzahl von O-Atomen in den Poly(alkylenoxid)resten definiert ist und die Anzahl von Metallionen in diesem Verhältnis als die Anzahl von Metallionen, die von den zusätzlichen Metallionen bereitgestellt werden, definiert ist; und/oder die zusätzlichen Metallionen in der Form einer zweiten Metallionenkomponente (vorzugsweise Metallsalze) vorliegen, die in einer Menge von 0,1 Gew.-% bis 40 Gew.-%, vorzugsweise von 1 Gew.-% bis 10 Gew.-%, bezogen auf das Gesamtgewicht der Copolyesterfolie, vorhanden ist; und/oder
(ii) der Copolyester, die erste Metallionen-enthaltende Komponente und, falls vorhanden, eine zweite Metallionenkomponente, die die zusätzlichen Metallionen umfasst, der Hauptbestandteil der Folie sind und vorzugsweise wenigstens etwa 85 Gew.-%, vorzugsweise wenigstens etwa 95 Gew.-% und vorzugsweise wenigstens etwa 98 Gew.-% des Gesamtgewichts der Copolyesterfolie bilden; und/oder
(iii) die Folie ferner ein Antioxidationsmittel umfasst; und/oder
(iv) die Folie ferner einen anorganischen partikelförmigen Füllstoff ausgewählt aus Metalloidoxiden, wie z.B. Aluminiumoxid, Titandioxid, Zirkonoxid, Zinkoxid, Talkum und Siliciumdioxid; kalzinierter Porzellanerde; alkalischen Metallsalzen, wie z.B. den Carbonaten und Sulfaten von Calcium und Barium; und nichtleitenden keramischen Partikelmaterialien umfasst, wobei der anorganische partikelförmige Füllstoff eine von der ersten und

zweiten metallischen ionenhaltigen Komponente verschiedene Einheit ist und nicht das Metallion der ersten oder zweiten metallischen ionenhaltigen Komponente enthält, vorzugsweise wobei der anorganische partikelförmige Füllstoff in Mengen von 5 Gew.-% bis 20 Gew.-%, bezogen auf das Gesamtgewicht der Copolyesterfolie, vorhanden ist; und/oder
(v) die Folie eine Leitfähigkeit von wenigstens etwa $10^{-7}$ S/cm, vorzugsweise von wenigstens etwa $10^{-6}$ S/cm, gemessen bei 25 °C, und/oder eine Leitfähigkeit von wenigstens etwa $10^{-6}$ S/cm, vorzugsweise wenigstens etwa $10^{-5}$ S/cm, gemessen bei 60 °C, aufweist; und/oder
(vi) die Folie eine selbsttragende, biaxial orientierte Folie ist.

**15.** Verfahren zur Herstellung einer Polyesterfolie nach einem der Ansprüche 1 bis 14, wobei das Verfahren die Schritte umfasst:

(i) Umsetzen des Diols mit der Dicarbonsäure oder einem Ester davon (geeignet ein Niederalkyl($C_{1-4}$)ester, vorzugsweise der Dimethylester), um einen Bis(hydroxyalkyl)ester der Dicarbonsäure zu bilden;
(ii) Polymerisieren des Bis(hydroxyalkyl)esters der Dicarbonsäure in Gegenwart eines Poly(alkylenoxids) in einer Polykondensationsreaktion, um einen Copolyester zu bilden;
(iii) Einführen der ersten Metallionen-enthaltenden Komponente ausgewählt aus leitfähigen keramischen Partikelmanterialien und gegebenenfalls der zusätzlichen Metallionen aus einer oder mehreren Quellen, die von den leitfähigen keramischen Partikelmaterialien verschieden sind, während der Synthese des Copolyesters bei den Schritten (i) und/oder (ii) und/oder während eines nachfolgenden getrennten Compoundier- oder Mischschritts, um eine Copolyesterzusammensetzung zu bilden; und
(iv) Bilden einer Copolyesterfolie aus der Copolyesterzusammensetzung, vorzugsweise durch Schmelzenextrudieren der Zusammensetzung oder durch Lösungsmittelgießen einer Dispersion oder Lösung, die die Copolyesterzusammensetzung umfasst.

**16.** Verfahren zur Herstellung einer Polyesterfolie nach Anspruch 15, wobei das Reaktionsprodukt von Schritt (ii) einer Festkörperpolymerisation unterzogen wird; und/oder wobei die Folie auf eine Trägerbasis gegossen wird, die ihrerseits eine Komponente einer Festkörperbatterie ist, vorzugsweise eine Elektrode.

**17.** Folie, erhalten durch ein Verfahren nach einem der Ansprüche 15 oder 16.

**18.** Metall-Ionen-Batterie, umfassend eine Anode, eine Kathode und einen Separator zwischen der Anode und der Kathode, wobei der Separator die Folie nach einem der Ansprüche 1 bis 14 oder 17 ist.

**19.** Metall-Ionen-Batterie nach Anspruch 18, wobei:

(i) die Metall-Ionen-Batterie eine Feststoffbatterie ist; und/oder
(ii) das Metall der Metall-Ionen-Batterie aus Lithium ausgewählt ist; und/oder
(iii) die Anode ausgewählt ist aus Graphit- und Lithiumtitanat(LTO)-Anoden und/oder wobei die Kathode aus Lithium oder Mischoxiden von Lithium und anderen Metallen, insbesondere Lithiumtitanat, Lithiumeisenphosphat ($LiFePO_4$) und/oder Lithium-Nickel-Mangan-Kobaltoxid ($LiNiMnCoO_2$) besteht; und/oder
(iv) die Metall-Ionen-Batterie ferner einen Anodenstromabnehmer, der auf einer Oberfläche der Anode angeordnet ist, und einen Kathodenstromabnehmer, der auf der Oberfläche der Kathode angeordnet ist, umfasst, so dass die Schichtreihenfolge Anodenstromabnehmer / Anode / Separator / Kathode / Kathodenstromabnehmer ist; und/oder
(v) der Anodenstromabnehmer und/oder der Kathodenstromabnehmer unabhängig ausgewählt sind aus Stromabnehmern, die eine biaxial orientierte Polyestersubstratschicht und eine erste Metallschicht auf einer Seite der Polyestersubstratschicht umfassen, wobei die Polyestersubstratschicht eine positive Wärmeausdehnung in Luft bei 200 °C in jeder von der Querrichtung (TD) und der Maschinenrichtung (MD) aufweist, wobei die Polyestersubstratschicht eine Dicke von nicht mehr als 12 um aufweist und wobei die erste Metallschicht eine Dicke von 50 bis 1000 nm aufweist, und vorzugsweise wobei der Stromabnehmer ferner eine zweite Metallschicht mit einer Dicke von 50 bis 1000 nm umfasst, wobei sich die erste Metallschicht und die zweite Metallschicht an gegenüberliegenden Seiten der Polyestersubstratschicht befinden, vorzugsweise wobei die erste Metallschicht und, falls vorhanden, die zweite Metallschicht jeweils unabhängig wenigstens eines von Aluminium, Kupfer, Nickel, Titan, Silber, Nickel-KupferLegierung oder Aluminium-Zirkonium-Legierung umfassen, und wobei vorzugsweise die erste und zweite Metallschicht aus dem gleichen Material ausgewählt sind und vorzugsweise wobei die erste und zweite Metallschicht beide entweder Aluminium oder Kupfer sind.

**20.** Verwendung einer Folie nach einem der Ansprüche 1 bis 14 oder 17 als Separator in einer Metall-Ionen-Batterie, vorzugsweise wobei die Batterie nach den Ansprüchen 18 oder 19 ist.

**21.** Verfahren zur Herstellung einer Metall-Ionen-Batterie nach den Ansprüchen 18 oder 19 umfassend eine Copolyesterfolie nach einem der Ansprüche 1 bis 14 oder 17, wobei das Verfahren die Schritte umfasst:

(a) Bereitstellen der Copolyesterfolie nach einem der Ansprüche 1 bis 14 oder 17;
(b) Zusammensetzen der Metall-Ionen-Batterie, wobei die Batterie eine Anode, eine Kathode und einen Separator zwischen der Anode und der Kathode umfasst, wobei der Separator die bei Schritt (a) erhaltene Copolyesterfolie ist.

## Revendications

**1.** Film de copolyester comprenant un copolyester qui comprend des motifs répétitifs dérivés d'un diol, d'un acide dicarboxylique et d'un poly(oxyde d'alkylène), dans lequel le film de copolyester comprend en outre un premier composant contenant des ions métalliques choisi parmi des matériaux particulaires céramiques conducteurs, dans lequel ledit premier composant contenant des ions métalliques est un composant contenant des ions lithium ou un composant contenant des ions sodium, dans lequel le film peut comprendre en outre des ions métalliques supplémentaires provenant d'une ou plusieurs sources autres que ledit matériau particulaire céramique conducteur, et dans lequel, lorsqu'il est présent, le métal desdits ions métalliques supplémentaires est le même que le métal dudit premier composant contenant des ions métalliques.

**2.** Film selon la revendication 1, dans lequel le film a une épaisseur non supérieure à 200 um, de préférence non supérieure à 150 um, de préférence non supérieure à 100 um, de préférence non supérieure à 85 um, de préférence non supérieure à 70 um, de préférence non supérieure à 50 um, et de préférence non supérieure à 35 $\mu$m ;
et/ou dans lequel le film a une épaisseur de 5 um ou plus, de préférence de 10 um ou plus, de préférence de 15 um ou plus, et de préférence de 20 um ou plus.

**3.** Film selon une quelconque revendication précédente dans lequel :

(i) ledit copolyester comprend des segments semi-cristallins dérivés d'un acide dicarboxylique et d'un diol aliphatique, et des segments amorphes dérivés d'un poly(oxyde d'alkylène) ; et/ou
(ii) le poly(oxyde d'alkylène) constitue de 0,1 à 80 % en poids, de préférence d'environ 5 à environ 78 % en poids, de préférence d'environ 10 à environ 75 % en poids, de préférence d'environ 12 à environ 65 % en poids, de préférence d'environ 15 à environ 60 % en poids, de préférence d'environ 16 à environ 55 % en poids du poids total du copolyester ; et/ou
(iii) le diol est choisi parmi des diols aliphatiques en $C_2$, $C_3$ ou $C_4$, de préférence dans lesquels le diol aliphatique est l'éthylèneglycol ; et/ou
(iv) l'acide dicarboxylique est un acide dicarboxylique aromatique choisi parmi l'acide isophtalique, l'acide naphtalène dicarboxylique et l'acide téréphtalique ; et/ou
(v) le poly(oxyde d'alkylène)glycol est choisi parmi des chaînes alkylène en $C_2$ à $C_{15}$, de préférence en $C_2$ à $C_{10}$, de préférence en $C_2$ à $C_6$, de préférence un polyéthylène glycol (PEG), un polypropylène glycol (PPG) et un poly(oxyde de tétraméthylène) glycol (PTMO), de préférence parmi PEG et PPG, le poly(oxyde d'alkylène) étant de préférence PEG ; et/ou
(vi) le poids moléculaire moyen en nombre du poly(oxyde d'alkylène) est compris entre environ 200 et environ 20 000 g/mole, de préférence entre environ 400 et environ 3 500 g/mole, de préférence entre environ 500 et environ 3 500 g/mole.

**4.** Film selon l'une quelconque des revendications précédentes, dans lequel le film comprend ledit premier composant contenant des ions métalliques et lesdits ions métalliques supplémentaires ;
éventuellement, lesdits ions métalliques supplémentaires se présentant sous la forme d'un deuxième composant ionique métallique, de préférence choisi parmi les sels métalliques.

**5.** Film selon l'une quelconque des revendications précédentes, dans lequel ledit métal est le lithium ; éventuellement, dans lequel le matériau particulaire céramique conducteur contenant des ions lithium est choisi parmi des matériaux particulaires céramiques de type NASICON tels que des matériaux particulaires céramiques de type vitrocéramique conducteurs contenant des ions lithium ; des matériaux particulaires céramiques de type LISICON ; des matériaux

particulaires céramiques d'oxyde de type perovskite ; des matériaux particulaires céramiques d'oxyde de type grenat ; des matériaux particulaires céramiques de type oxynitrure de phosphore et de lithium (LIPON) ; et des matériaux particulaires céramiques de silicate d'aluminium et de lithium (LAS) ; en outre, éventuellement, dans lequel le matériau particulaire céramique conducteur contenant des ions lithium est choisi parmi :

des matériaux de type NASICON ayant la formule générale $LiM_y(PO_4)_3$, dans laquelle M représente un ion métallique multivalent tel qu'un ou plusieurs des éléments Al, Si, Ti, Zr, Ge, Sn et Hf ;
des matériaux de type NASICON ayant la formule générale $Li_{1+x}M_xTi_{2-x}(PO_4)_3$ (LATP) dans laquelle M représente un cation trivalent choisi parmi un ou plusieurs parmi Al, Sc, Y et La ;
des matériaux de type NASICON ayant la formule générale $Li_{1+x}Al_xGe_{2-x}(PO_4)_3$ (LAGP) ;
des matériaux ayant une phase cristalline de $Li_{1+x+y}Al_xTi_{2-x}Si_yP_{3-y}O_{12}$ et une composition de $Li_2O$-$Al_2O_3$-$SiO_2$-$P_2O_5$-$TiO_2$ ;
des matériaux ayant une phase cristalline principale de $Li_{1+x+y}Al_x(Ti, Ge)_{2-x}Si_yP_{3-y}O_{12}$ et une composition de $Li_2O$-$Al_2O_3$-$SiO_2$-$P_2O_5$-$TiO_2$-$GeO_2$ ;
des matériaux de type LISICON ayant la formule générale $Li_{2+2x}Zn_{1-x}GeO_4$, éventuellement dans lequel d'autres éléments (typiquement des éléments isovalents) peuvent remplacer le Li, Zn et/ou Ge, tels que $Li_{2+2x}Zn_{1-x}Ge_4O_{16}$, $Li_{14}ZnGe_4O_{16}$, $Li_{(3+x)}Ge_xV_{(1-x)}O_4$, $Li_{(4-x)}Si_{(1-x)}P_xO_4$ ;
des matériaux de type thio-LISICON tels que $Li_{(4-x)}Ge_{(1-x)}P_xS_4Li_{10}GeP_2S_{12}$ ;
des matériaux d'oxyde de type perovskite tels que $Li_{3x}La_{(2/3)-x}TiO_3$ (LLTO) et $Li_{3x}La_{1/3-x}TaO_3$ ;
des matériaux d'oxyde de type grenat ayant la formule générale $Li_{7-3y-x}La_3Zr_{2-x}M1_yM2_xO_{12}$ (dans laquelle M1 désigne un cation trivalent tel que Al et Ga, M2 désigne un cation pentavalent tel que Nb et Ta, $x \geq 0$ et $y \leq 2$) tels que $Li_5La_3M_2O_{12}$ (dans laquelle M désigne Nb et/ou Ta),
$Li_6ALa_2M_2O_{12}$ (dans laquelle A désigne Ca, Sr et/ou Ba, et M désigne Nb ou Ta) ou $Li_{6.5}La_{2.5}Ba_{0.5}ZrTaO_{12;}$
des matériaux de type LIPON ayant la formule générale $Li_xPO_yN_z$, tels que $Li_2PO_2N$ ; et
des matériaux de type LAS tels que $AlLiO_6Si_2$.

**6.** Film selon l'une quelconque des revendications 1 à 4, dans lequel ledit métal est le sodium et le matériau particulaire céramique conducteur contenant des ions sodium est choisi parmi les matériaux du type NASICON tels que les matériaux particulaires vitrocéramiques conducteurs, les phases de bêta-alumine et bêta"-alumine $Na_2O.nAl_2O_3$ dans laquelle $5 \leq n \leq 11$, les silicates de terres rares de sodium et les verres d'oxyhalogénures conducteurs d'ions sodium ; et de préférence parmi les oxydes structurés NASICON de formule générale $Na_3Zr_2Si_2PO_{12}$, $NaTi_2(PO_4)_3$, $NaGe_2(PO_4)_3$ ou $Na_{1+x}[Sn_xGe_{2-x}(PO_4)_3]$, les silicates de terres rares de sodium ayant la formule générale $Na_5MSi_4O_{12}$, dans laquelle M est Y, Sc, Lu et/ou tout cation trivalent des terres rares, et un verre d'oxyhalogénure conducteur d'ions sodium tel que NaI-NaCl-$Na_2O$-$B_2O_3$.

**7.** Film selon l'une quelconque des revendications précédentes, dans lequel la quantité dudit matériau particulaire céramique conducteur contenant des ions métalliques présent dans le film de copolyester est dans la plage de 0,1 % en poids à 60 % en poids, de préférence de 5 % en poids à 50 % en poids, de préférence de 8 % en poids à 35 % en poids, de préférence de 10 à 20 % en poids du poids total du film de copolyester.

**8.** Film selon l'une quelconque des revendications précédentes, dans lequel lesdits ions métalliques supplémentaires sont sous la forme d'un sel métallique choisi parmi les sels :

(i) d'acides carboxyliques aromatiques, de préférence les acides dicarboxyliques aromatiques, de préférence l'acide téréphtalique ou l'acide isophtalique ;
(ii) d'acides carboxyliques aliphatiques, y compris les acides dicarboxyliques aliphatiques, de préférence l'acide acétique, l'acide glycolique ou l'acide succinique ;
(iii) d'acides carboniques ;
(iv) d'acides phénoliques, de préférence l'acide salicylique ;
(v) d'acides minéraux, tels que l'acide perchlorique ou l'acide phosphorique, en particulier l'acide phosphorique ; et
(vi) d'acides boriques, de préférence l'acide bis(oxalate)borique.

**9.** Film selon l'une quelconque des revendications précédentes, dans lequel lesdits ions métalliques supplémentaires sont sous la forme d'un sel métallique d'un acide organique, et qui est de préférence le sel de l'acide dicarboxylique aromatique duquel le copolyester est dérivé.

**10.** Film selon la revendication 8 ou 9, dans lequel lesdits ions métalliques supplémentaires sont sous la forme d'un sel

métallique choisi parmi les esters d'alcoxylate desdits acides, de préférence les acides carboxyliques, de préférence les acides dicarboxyliques, de préférence les acides dicarboxyliques aromatiques, de préférence l'acide téréphtalique, et dans lequel lesdits esters d'alcoxylate dérivent de préférence des diols aliphatiques, de préférence des diols aliphatiques en $C_{2-10}$, de préférence des diols aliphatiques en $C_{2-6}$, de préférence des diols aliphatiques en $C_2$, $C_3$ ou $C_4$, plus préférablement de l'éthylèneglycol, du 1,3-propanediol et du 1,4-butanediol, plus préférablement de l'éthylèneglycol.

**11.** Film selon l'une quelconque des revendications précédentes, dans lequel lesdits ions métalliques supplémentaires sont des ions lithium et sous forme de sels de lithium choisis parmi bis(trifluorométhanesulfonyl)imide (LiTFSI), hexafluorophosphate de lithium ($LiPF_6$), tétrafluoroborate de lithium ($LiBF_4$), thiocyanate de lithium (LiSCN), hexafluoroarséniate de lithium ($LiAsF_6$), trifluorométhanesulfonate de lithium ($LiCF_3SO_3$), bromure de lithium (LiBr), iodure de lithium (LiI), bis(trifluorométhanesulfonimide) de lithium ($LiN(CF_3SO_2)_2$), tris(trifluorométhylsulfonyl)méthide de lithium ($LiC(CF_3SO_2)_3$), orthosilicate de lithium, trifluoroacétate de lithium ($LiCF_3CO_2$), bis(fluorosulfite)amide de lithium ($LiN(FO_2S)_2$), téréphtalate de dilithium (DLTA), isophtalate de dilithium, glycolate de lithium, benzoate de lithium, acétate de lithium, carbonate de lithium, perchlorate de lithium, orthosilicate de lithium, phosphate de lithium, salicylate de lithium, succinate de lithium, bis(oxalato)borate de lithium et bis-hydroxyéthyltéréphtalate de dilithium (DL-BHET) ; éventuellement, lesdits ions métalliques supplémentaires étant des ions lithium et sous forme de sels de lithium choisis parmi le téréphtalate de dilithium (DLTA), l'isophtalate de dilithium, le bis-hydroxyéthyltéréphtalate de dilithium (DL-BHET) et $LiCF_3SO_3$.

**12.** Film selon l'une quelconque des revendications 1 à 9, dans lequel lesdits ions métalliques supplémentaires sont des ions sodium et sous forme de sels de sodium choisis parmi nitrate de sodium ($NaNO_3$), perchlorate de sodium ($NaClO_4$), tétrafluoroborate de sodium ($NaBF_4$), hexafluorophosphate de sodium ($NaPF_6$), bis(trifluorométhanesulfonyl)imide de sodium (NaTFSI), bis(trifluorométhane)sulfonimide de sodium ($Na[N(CF_3SO_2)_2]$), hexafluoroarséniate de sodium (V) ($NaAsF_6$), bis(oxalatoborate) de sodium (« Nabob »), halogénures de sodium (NaX), où X = Cl, Br ou I, thiocyanate de sodium (NaSCN), pentacyanopropénide de sodium (NaPCPI), tétracyanopirolate de sodium (NaTCP) et tricyanoimidazolate de sodium (NaTIM).

**13.** Film selon l'une quelconque des revendications 1 à 12, dans lequel :

(i) lesdits ions métalliques supplémentaires sont présents dans la matrice polymère du film et maintenus à l'intérieur de celle-ci par l'interaction entre les cations métalliques et les atomes d'oxygène chargés négativement du copolyester, de préférence au moins les atomes d'oxygène des motifs de poly(oxyde d'alkylène) ; ou
(ii) lesdits ions métalliques supplémentaires se présentent sous la forme d'un sel métallique et sont maintenus dans la matrice polymérique du film grâce à l'interaction entre les cations métalliques et l'anion dudit sel métallique qui n'est pas lié de manière covalente au copolyester.

**14.** Film selon une quelconque revendication précédente dans lequel :

(i) la quantité desdits ions métalliques supplémentaires dans le film est efficace pour fournir un rapport molaire métal : O de 5:1 à 1:50, de préférence d'environ 4:1 à environ 1:50, de préférence d'environ 3:1 à environ 1:50, de préférence d'environ 2:1 à environ 1:50, de préférence d'environ 1:1 à environ 1:40, de préférence d'environ 1:2 à environ 1:30, de préférence d'environ 1:4 à environ 1:25, le nombre d'atomes d'O dans ce rapport étant défini comme le nombre d'atomes d'O dans les radicaux de poly(oxyde d'alkylène), et le nombre d'atomes métalliques dans ce rapport étant défini comme le nombre d'atomes métalliques fournis par lesdits ions métalliques supplémentaires ; et/ou lesdits ions métalliques supplémentaires étant sous la forme d'un deuxième composant ionique métallique (de préférence des sels métalliques) qui est présent en une quantité de 0,1 % en poids à 40 % en poids, de préférence de 1 % en poids à 10 % en poids du poids total du film copolyester ; et/ou
(ii) le copolyester, le premier composant contenant des ions métalliques et, le cas échéant, un deuxième composant ionique métallique comprenant lesdits ions métalliques supplémentaires, sont le composant principal du film et représentent de préférence au moins environ 85 %, de préférence au moins environ 95 %, et de préférence au moins environ 98 % en poids du poids total du film de copolyester ; et/ou
(iii) le film comprend en outre un antioxydant ; et/ou
(iv) le film comprend en outre une charge particulaire inorganique choisie parmi les oxydes de métalloïdes tels que l'alumine, le dioxyde de titane, la zircone, l'oxyde de zinc, le talc et la silice ; le kaolin calciné ; des sels de métaux alcalins tels que les carbonates et les sulfates de calcium et de baryum ; et des matériaux particulaires céramiques non conducteurs, dans lesquels ladite charge particulaire inorganique est une entité différente des premier et deuxième composants contenant des ions métalliques et ne contient pas l'ion métallique des premier

et deuxième composants contenant des ions métalliques, de préférence dans lesquels la charge particulaire inorganique est présente en des quantités de 5 % en poids à 20 % en poids, par rapport au poids total du film de copolyester ; et/ou
(v) le film présente une conductivité d'au moins environ $10^{-7}$ S/cm, de préférence d'au moins environ $10^{-6}$ S/cm mesurée à une température de 25 °C, et/ou une conductivité d'au moins environ $10^{-6}$ S/cm, de préférence d'au moins environ $10^{-5}$ S/cm mesurée à une température de 60 °C ; et/ou
(vi) le film est un film autoportant orienté biaxialement.

**15.** Procédé de fabrication d'un film de polyester tel que décrit dans l'une quelconque des revendications 1 à 14, dans lequel ledit procédé comprend les étapes de :

(i) mise en réaction dudit diol avec ledit acide dicarboxylique ou un ester de celui-ci (de préférence un ester d'alkyle inférieur en $C_{1-4}$, de préférence l'ester diméthylique), pour former un ester de bis(hydroxyalkyle) dudit acide dicarboxylique ;
(ii) polymérisation dans une réaction de polycondensation dudit ester de bis(hydroxyalkyle) dudit acide dicarboxylique en présence d'un poly(oxyde d'alkylène) pour former un copolyester ;
(iii) introduction dudit premier composant contenant des ions métalliques choisi parmi des matériaux particulaires céramiques conducteurs, et éventuellement desdits ions métalliques supplémentaires provenant d'une ou plusieurs sources autres que lesdits matériaux particulaires céramiques conducteurs, pendant la synthèse du copolyester dans les étapes (i) et/ou (ii), et/ou pendant une étape de compoundage ou de mélange distincte subséquente, pour former une composition de copolyester ; et
(iv) formation d'un film de copolyester à partir de ladite composition de copolyester, de préférence par extrusion à l'état fondu de ladite composition ou par coulée au solvant d'une dispersion ou d'une solution comprenant ladite composition de copolyester.

**16.** Procédé de fabrication d'un film de polyester selon la revendication 15, dans lequel le produit de réaction de l'étape (ii) est soumis à une polymérisation à l'état solide ; et/ou
dans lequel ledit film est coulé sur une base de support qui est elle-même un composant d'une batterie à l'état solide, de préférence une électrode.

**17.** Film obtenu par un procédé selon l'une quelconque des revendications 15 ou 16.

**18.** Batterie métal-ion comprenant une anode, une cathode et un séparateur entre l'anode et la cathode, dans laquelle ledit séparateur est le film défini dans l'une quelconque des revendications 1 à 14 ou 17.

**19.** Batterie métal-ion selon la revendication 18, dans laquelle :

(i) la batterie métal-ion est une batterie à l'état solide ; et/ou
(ii) le métal de ladite batterie métal-ion est choisi parmi le lithium ; et/ou
(iii) l'anode est choisie parmi les anodes de graphite et de titanate de lithium (LTO), et/ou dans laquelle la cathode est composée de lithium ou d'oxydes mixtes de lithium et d'autres métaux, notamment le titanate de lithium, le phosphate de fer et de lithium ($LiFePO_4$) et/ou l'oxyde de lithium-nickel-manganèse-cobalt ($LiNiMnCoO_2$) ; et/ou
(iv) la batterie métal-ion comprend en outre un collecteur de courant anodique disposé sur une surface de l'anode et un collecteur de courant cathodique disposé sur la surface de la cathode, de sorte que l'ordre des couches est collecteur de courant anodique / anode / séparateur / cathode / collecteur de courant cathodique ; et/ou
(v) ledit collecteur de courant anodique et/ou ledit collecteur de courant cathodique sont choisis indépendamment parmi des collecteurs de courant comprenant une couche de substrat de polyester orientée biaxialement et une première couche métallique sur un côté de la couche de substrat de polyester, la couche de substrat de polyester présentant une dilatation thermique positive dans l'air à une température de 200 °C dans chacune parmi le sens transversal (TD) et le sens machine (MD), la couche de substrat de polyester ayant une épaisseur ne dépassant pas 12 um, et dans lequel la première couche métallique ayant une épaisseur de 50 à 1 000 nm, et de préférence dans lequel le collecteur de courant comprend en outre une deuxième couche métallique ayant une épaisseur de 50 à 1 000 nm, la première couche métallique et la deuxième couche métallique étant sur des côtés opposés de la couche de substrat de polyester, de préférence dans lequel la première couche métallique et, le cas échéant, la deuxième couche métallique comprennent chacune indépendamment au moins un élément parmi l'aluminium, le cuivre, le nickel, le titane, l'argent, un alliage nickel-cuivre ou un alliage aluminium-zirconium, et de préférence dans lequel les première et deuxième couches métalliques sont choisies parmi le même matériau, et de préférence dans lequel les première et deuxième couches métalliques sont toutes deux soit en aluminium, soit en cuivre.

**20.** Utilisation d'un film tel que défini dans l'une quelconque des revendications 1 à 14 ou 17 comme un séparateur dans une batterie métal-ion, de préférence dans laquelle ladite batterie est telle que définie dans les revendications 18 ou 19.

**21.** Procédé de fabrication d'une batterie métal-ion selon la revendication 18 ou 19, comprenant un film de copolyester selon l'une quelconque des revendications 1 à 14 ou 17, le procédé comprenant les étapes de :

(a) fourniture du film de copolyester défini dans l'une quelconque des revendications 1 à 14 ou 17 ;
(b) assemblage de la batterie métal-ion, dans lequel la batterie comprend une anode, une cathode et un séparateur entre l'anode et la cathode, dans lequel ledit séparateur est le film de copolyester obtenu de l'étape (a).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019186173 A
- US 2017294678 A1
- EP 3907802 A1
- JP 2015187941 A
- EP 0419400 A
- EP 2108673 A
- US 20090117362 A1
- GB 2106834 A